(19) Europäisches Patentamt
European Patent Office
Office européen des brevets

(11) **EP 2 347 541 B1**

(12) **FASCICULE DE BREVET EUROPEEN**

(45) Date de publication et mention
de la délivrance du brevet:
**04.04.2018 Bulletin 2018/14**

(21) Numéro de dépôt: **09756328.2**

(22) Date de dépôt: **06.10.2009**

(51) Int Cl.:
***H04L 9/32*** *(2006.01)*

(86) Numéro de dépôt international:
**PCT/FR2009/001186**

(87) Numéro de publication internationale:
**WO 2010/043779 (22.04.2010 Gazette 2010/16)**

(54) **SYSTÉME D'AUTENTIFICATION**

**AUTHENTIFIKATIONSSYSTEM**

**AUTHENTICATION SYSTEM**

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **15.10.2008 FR 0856997**

(43) Date de publication de la demande:
**27.07.2011 Bulletin 2011/30**

(73) Titulaire: **In-Webo Technologies S.a.S.
75009 Paris (FR)**

(72) Inventeur: **PERROT, Didier
F-75009 Paris (FR)**

(74) Mandataire: **Novagraaf Technologies
Bâtiment O2
2, rue Sarah Bernhardt
CS90017
92665 Asnières-sur-Seine Cedex (FR)**

(56) Documents cités:
**WO-A-02/17555          WO-A-2006/075917
US-A1- 2004 172 535**

**EP 2 347 541 B1**

**Description**

La présente invention concerne un système d'authentification de service à distance.

Actuellement, de nombreux services à distance sur internet ou sur les réseaux informatiques et de télécommunication en général utilisent des moyens pour authentifier leurs utilisateurs.

Le plus souvent, cette authentification a lieu au moyen d'un identifiant et d'un mot de passe à saisir par l'utilisateur dans un formulaire d'accueil. Cependant cette solution simple et bien acceptée par les utilisateurs est réputée offrir un niveau de sécurité faible. Par exemple, les mots de passe choisis par les utilisateurs sont faciles à deviner et des logiciels spécialisés sont capables de trouver le mot de passe utilisé en quelques minutes pour de trop nombreux utilisateurs.

Aussi différentes solutions ont été proposées pour obtenir une authentification sécurisée adaptée à des services ayant de forts enjeux comme, par exemple, l'accès à des opérations bancaires. Document WO 02/17555 décrit des systèmes, des procédés et des supports pouvant être lus par ordinateur destinés à permettre à un dispositif serveur de valider un ou plusieurs dispositifs client. Une large majorité de ces solutions se base sur l'utilisation d'un dispositif de sécurité particulier, le plus souvent une carte à puce ou carte à microprocesseur capable de jouer un rôle de coffre-fort électronique pour stocker des clés cryptographiques secrètes et effectuer certains calculs de cryptographie. Cette solution a pour inconvénient d'obliger l'utilisateur à transporter un objet supplémentaire. De plus, il devient nécessaire de prévoir un dispositif d'interfaçage pour permettre à la carte à puce de communiquer avec le service demandant cette authentification forte.

Il serait donc particulièrement avantageux d'obtenir un niveau de sécurité équivalent à celui qui est procuré par une carte à puce en utilisant des objets déjà en possession de l'utilisateur tels que, par exemple, son téléphone mobile, son ordinateur de poche ou PDA, voire son ordinateur personnel.

Pour résoudre un ou plusieurs des inconvénients cités précédemment, le système d'authentification d'un utilisateur possède un moyen d'authentification (3) auprès d'une entité d'authentification (1), ledit moyen d'authentification comportant des moyens de stockage (11) d'au moins une variable d'état et un générateur (2) d'un code d'accès à usage unique actionnable à la demande de l'utilisateur, ledit code d'accès comportant au moins une partie non-prévisible et étant transmis à l'entité d'authentification pour validation, cette validation authentifiant l'utilisateur auprès de l'entité d'authentification, caractérisé en ce que ladite variable d'état est mise à jour de façon aléatoire par et à l'initiative dudit moyen d'authentification, systématiquement et préalablement à chaque génération d'un nouveau code d'accès, en ce que ledit générateur est adapté pour calculer ledit code d'accès en utilisant ladite au moins une variable d'état une fois celle-ci mise à jour, et en ce que ladite entité d'authentification est adaptée pour modifier la valeur d'au moins une variable d'état interne lors de la validation au moins partielle dudit code d'accès en utilisant pour cela des informations connues préalablement de ladite entité d'authentification ainsi que la partie non-prévisible véhiculée par le code d'accès transmis.

Cela permet de traiter avantageusement les problèmes de désynchronisation auxquels de tels dispositifs sont sujets, comme c'est le cas lorsqu'un utilisateur ne transmet pas le ou les codes générés par un dispositif à compteur, ou pour un dispositif à horloge où l'alimentation ou le réglage de l'horloge ne peuvent être garantis dans la durée, comme c'est par exemple le cas d'un téléphone mobile. Un avantage supplémentaire en découlant est de ne pas nécessiter l'introduction de mécanismes externes de resynchronisation, ces mécanismes étant soit coûteux lorsque, par exemple, l'utilisateur doit contacter le fournisseur du service à distance pour procéder à la resynchronisation, soit peu cohérent du point de vue de la sécurité, c'est-à-dire in fine de l'efficacité du système d'authentification lorsque, par exemple, le serveur validant l'authentification autorise une large plage de valeurs possibles pour le compteur ou l'horloge afin que les usages éventuellement non raisonnés de l'utilisateur maintiennent le compteur ou l'horloge dans cette plage.

Cela permet par ailleurs de traiter avantageusement les problèmes de sécurité bien connus de l'homme de l'art, problèmes rencontrés par des dispositifs où le moyen d'authentification est un logiciel ne s'appuyant pas sur un élément matériel de sécurité (hardware security element), le moyen d'authentification étant alors copiable et analysable, et la sécurité du système compromise ; de façon similaire, le problème décrit ci-après est avantageusement traité, lorsque le moyen d'authentification est un logiciel requérant la saisie par l'utilisateur d'une clé secrète courte, ladite clé étant simple à trouver par l'homme de l'art, sans effectuer de transactions avec le serveur validant l'authentification, que cette clé se trouve ou non stockée par le moyen d'authentification.

Des caractéristiques ou des modes de réalisation particuliers sont :

- chaque variable d'état est mis à jour par une fonction Fx à sens unique ayant comme paramètres d'entrée au moins un secret propre audit moyen d'authentification.
- au moins un premier et un deuxième niveau d'authentification utilisables tels que le code d'accès est calculé selon le premier ou le deuxième niveau, le deuxième niveau comportant la saisie par l'utilisateur d'un code secret utilisé comme paramètre d'entrée de la fonction Fx.
- le moyen d'authentification comporte une pluralité de variables d'état mises à jour par la fonction Fx, ladite fonction Fx étant composée d'une pyramide de sous-fonctions ayant comme paramètres d'entrée lesdites variables d'état de telle sorte qu'une variable d'état mise à jour par une des sous-fonctions de Fx n'est pas utilisée par celle-ci comme paramètre d'entrée.

- il comporte un premier, un deuxième et un troisième niveau d'authentification, le nombre de variables d'état mises à jour variant en fonction du niveau d'authentification mis en oeuvre de telle sorte que :

    - dans le premier niveau d'authentification : une variable d'état est mise à jour, les deux autres variables d'état servant de paramètres d'entrée à la sous fonction de Fx ;
    - dans le deuxième niveau d'authentification : deux variables d'état sont mises à jour, le troisième servant de variable d'entrée, et
    - dans le troisième niveau d'authentification : les trois variables d'état sont mises à jour et aucune des variables d'état n'est utilisée en variable d'entrée.

- il comporte en outre un client d'authentification et le troisième niveau d'authentification utilisant ce client, ledit client d'authentification comportant un secret et étant adapté pour générer un second code d'accès à partir du code d'accès généré par le moyen d'authentification, ledit second code d'accès étant adapté pour authentifier l'utilisateur auprès de l'entité d'authentification.
- le générateur comporte des moyens de génération d'un premier nombre à partir d'une fonction Gx à sens unique dont les paramètres d'entrée comportent la au moins une variable d'état mise à jour.
- le générateur comporte :

    - une fonction Ex à sens unique pour générer un second nombre et comportant comme paramètres d'entrée :

        - le secret du moyen d'authentification ;
        - le nombre aléatoire,

    - une fonction possédant une fonction inverse adaptée pour combiner le premier et le second nombre générés par les fonctions Gx et Ex, le nombre combiné représentant le code d'accès et la fonction inverse étant adaptée pour générer le premier nombre et le second nombre à partir du code d'accès.

- l'entité d'authentification est adaptée pour vérifier la validité du second nombre et la validité du premier nombre de façon distincte.
- lors de la vérification de validité, l'entité d'authentification met à jour des états internes.
- au moins un paramètre d'entrée de la fonction Gx est une variable d'état mise à jour avec une information non prévisible générée par le moyen d'authentification lors d'une étape précédente de génération de code d'accès.
- le moyen d'authentification et l'entité d'authentification comportent chacun une horloge, et le moyen d'authentification est adapté pour utiliser un intervalle de temps entre un temps de référence et le temps de son horloge dans le calcul du code d'accès et l'entité d'authentification est adaptée pour ne valider un code d'accès que si elle l'a reçu dans une plage de temps déterminé par rapport au temps de génération dudit code d'accès.
- le système permettant l'authentification de l'utilisateur à une pluralité de services, un code d'accès est généré par le moyen d'authentification en utilisant un code spécifique à un service donné de telle sorte que sa validation par l'entité d'authentification ne donne accès qu'audit service.
- le moyen d'authentification est adapté pour calculer un premier code d'accès en utilisant au moins un code spécifique au service, au moyen d'authentification et un intervalle de temps et l'entité d'authentification est adaptée pour calculer un second code d'accès spécifique au service , au moyen d'authentification et le transmettre à l'utilisateur pour que celui-ci puisse le comparer au premier code d'accès et identifier de façon sûre ainsi le service, lesdits premier et second code d'accès n'étant identique que si le calcul du premier code d'accès par le moyen d'authentification est réalisé dans une plage de temps déterminée par rapport au temps de calcul du second code secret par l'entité d'authentification et les codes spécifiques au service et au moyen d'authentification utilisés sont les mêmes.

L'invention sera mieux comprise à la lecture de la description qui suit, faite uniquement à titre d'exemple, et en référence aux figures en annexe dans lesquelles :

- la figure 1 est une vue schématique d'un système d'authentification selon un mode de réalisation de l'invention ;
- les figures 2A, 2B et 2C sont des vues schématiques du fonctionnement selon trois options différentes du système de la figure 1 ;
- la figure 3 est un ordinogramme du calcul d'un code d'accès par un moyen d'authentification du système de la figure 1 ;
- la figure 4 est un ordinogramme du calcul d'un code d'accès par un client d'authentification du système de la figure 1 ; et

- la figure 5 est un ordinogramme de la vérification d'un code d'accès par une entité d'authentification du système de la figure 1.

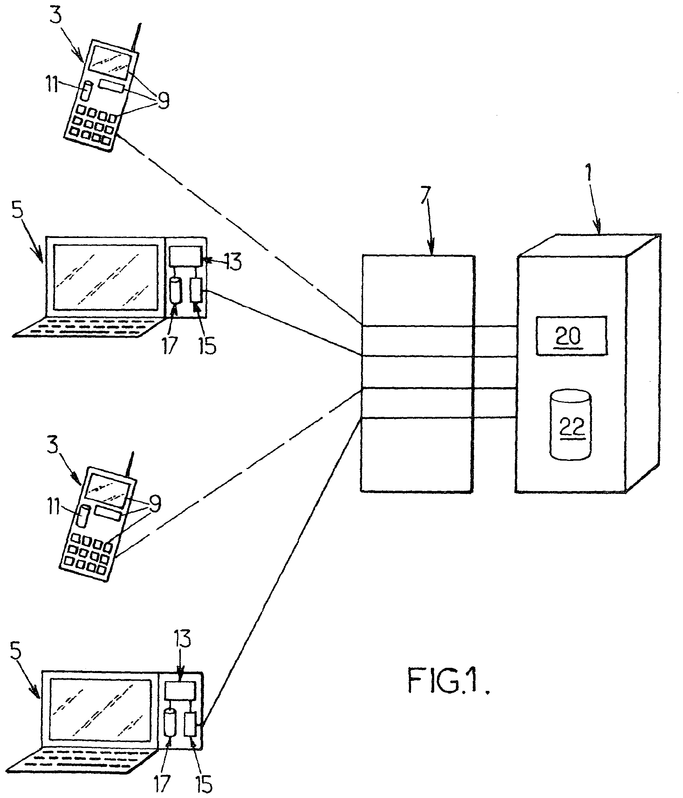

En référence à la figure 1, un système d'authentification comporte une entité d'authentification 1 faisant fonction de serveur d'authentification, un ou plusieurs moyens d'authentification 3 ainsi qu'un ou plusieurs clients d'authentification 5. Les moyens 3 et les clients 5 d'authentification sont détenus par des utilisateurs du système.

Un serveur 7 joue le rôle de gestionnaire d'authentification pour implémenter les interfaces et fonctionnalités nécessaires pour une utilisation sûre et multiservice des moyens, clients et entité d'authentification, ces derniers étant éventuellement tiers à cette description.

L'entité d'authentification 1 et le gestionnaire d'authentification 7 peuvent être regroupés ou non sur un même serveur physique.

Les moyens 3 d'authentification comportent des moyens 9 de calcul et d'interface utilisateur programmables. L'interface utilisateur comporte en particulier des moyens de saisie d'un code secret, par exemple un clavier numérique, et des moyens de visualisation et/ou de transmission d'un code M d'accès. En effet, le code d'accès M est transmis à l'entité d'authentification soit directement par une liaison de données, soit visualisé par l'utilisateur sur un écran des moyens d'authentification puis saisi par cet utilisateur dans une fenêtre d'authentification ou transmis oralement, ou par modulation de fréquence DTMF, à un serveur vocal, par exemple. Les moyens d'authentification comportent en outre des moyens 11 de stockage d'une ou plusieurs variables d'état i, j, k ainsi que d'un secret K1 unique pour chaque moyen. Par exemple, les moyens 3 d'authentification sont programmables dans un téléphone mobile ayant des moyens d'exécution de programme tels qu'une machine virtuelle Java.

Les clients 5 comportent également des moyens 13 de calcul et d'interface utilisateur programmable et des moyens 15 de transmission de données avec l'entité d'authentification 1, par exemple via le réseau internet. En particulier, les clients 5 comportent des moyens de stockage 17 d'un secret unique $K_3$ pour chaque client, ce secret pouvant prendre la forme d'une paire de clé privée/publique ($pK_3$, $sK_3$) d'un algorithme cryptographique à clé publique. Les clients 5 sont typiquement implémentés sur des ordinateurs tels que des ordinateurs de bureau, des ordinateurs portables ou de poche ou des téléphones mobiles.

Le gestionnaire d'authentification 7 est une interface intelligente entre les moyens d'authentification 3 et l'entité d'authentification 1. Cette interface est transparente au niveau du protocole d'authentification décrit ci-dessous et est donc facultative dans la mise en oeuvre de celui-ci. Cependant, dans un environnement réel, le gestionnaire d'authentification apporte les fonctionnalités nécessaires à un fonctionnement ergonomique et efficace du système d'authentification dans son environnement c'est-à-dire ses utilisateurs et les services utilisant le système d'authentification pour donner accès à leurs prestations aux utilisateurs. Ainsi le gestionnaire d'authentification 7 apporte notamment les fonctionnalités suivantes :

- contrôle d'accès d'entité gestionnaire des services utilisant le système d'authentification : répartition de charge, authentification, gestion et sécurisation des connexions et requêtes ;
- traitement des demandes d'authentification à ces services émanant de ces entités : routage, enrichissement par des données statiques ou dynamiques, réponse ;
- traitement des demandes de gestion ou d'administration émanant de ces entités, qu'il s'agisse de demandes concernant le système ou les utilisateurs finaux : création et activation sécurisées d'un compte pouvant mettre en oeuvre , par exemple, un algorithme de type Diffie-Hellmann pour la transmission sécurisée de secrets générés par le moyen d'authentification initialement « inerte », ajout et suppression d'un service tels que service à distance, utilisation à distance d'une carte de paiement ou de fidélisation, gestion des droits, etc. ;
- contrôle d'accès des clients d'authentification : authentification, répartition de charge, gestion et sécurisation des connexions et requêtes ;
- traitement des demandes de gestion des comptes des utilisateurs finaux émanant des clients d'authentification : gestion des droits, requêtes de service, ajout, suppression ou gestion de moyens ou clients d'authentification/ d'identification, ajout ou gestion de moyens de restauration du compte ;
- contrôle d'accès et traitement des requêtes effectuées en ligne (notamment liées à la restauration des comptes utilisateurs) : authentification, répartition de charge, traitement des requêtes ; et
- fonctions d'administration du système d'authentification.

L'entité d'authentification 1 comporte, outre des moyens 20 de calcul, des moyens 22 de stockage, pour chaque moyen et chaque client d'authentification, du secret K1, du secret K3 ou, dans la version à cryptographie à clé publique, la clé publique pK3, des variables d'état ii, jj, kk symétriques des variables d'état i, j, k du moyen d'authentification, un secret constant correspondant au code secret de l'utilisateur sous une forme hachée, des compteurs d'erreurs et, préférentiellement, une pile de données Π.

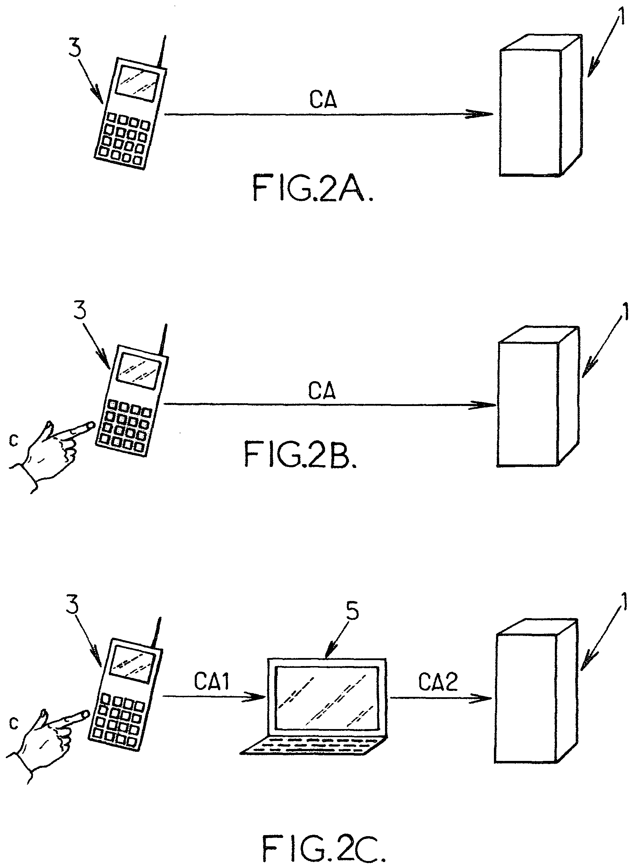

Le fonctionnement du système d'authentification et du protocole d'authentification va maintenant être expliqué en relation avec les figures 2A, 2B et 2C.

L'authentification d'un utilisateur auprès d'un service est réalisée par la transmission d'un code d'accès CA qui est vérifié par l'entité d'authentification 1. Si ce code est valide, l'entité d'authentification autorise l'utilisateur à accéder au service demandé.

Le système d'authentification comporte trois modes de fonctionnement se traduisant par trois options A, B et C de génération de code d'accès par le moyen d'authentification.

Les options A et B génèrent un code d'accès pour l'authentification à un service utilisant le système d'authentification. L'option A, figure 2A, permet une authentification à 1 facteur basé sur le secret K1 détenu par le moyen d'authentification. L'option B, figure 2B, permet une authentification à 2 facteurs : le secret K1 détenu par le moyen d'authentification et un secret c saisi par le titulaire.

L'option C, figure 2C, génère un code d'accès $CA_1$ pour la connexion au client d'authentification qui effectue l'opération de transmission du code d'accès $CA_2$ à l'entité d'authentification, code d'accès différent de celui calculé par le moyen d'authentification. L'option C permet une authentification à 3 facteurs : le secret K1 détenu par le moyen d'authentification et un secret c saisi par le titulaire comme pour l'option B et le secret K3, ou le couple sK3/pK3, détenu par le client d'authentification.

Le choix de l'option à utiliser pour s'authentifier est, en règle générale, laissé à l'appréciation de l'utilisateur puisque C n'a pas la même fonction que A et B : C sert, du point de vue du titulaire, à la connexion au client d'authentification, tandis que A et B servent à l'authentification auprès d'un service utilisant le système.

Le choix d'utiliser A plutôt que B ou l'inverse est également le fait du titulaire. L'option A génère un code d'accès uniquement lié au moyen d'authentification aussi un attaquant se procurant ce moyen peut se faire passer pour le titulaire. L'option B génère un code d'accès lié au moyen d'authentification et à un secret personnel que le titulaire saisit pour obtenir un code d'accès. Le secret personnel du titulaire n'est pas stocké dans le moyen d'authentification mais le code d'accès généré ne sera exact que si le secret personnel saisi par l'utilisateur l'est également.

Cependant certaines conditions du système peuvent obliger l'utilisateur à utiliser une option plutôt qu'une autre. En particulier, le moyen d'authentification effectue plusieurs contrôles liés aux usages synchrone et asynchrone des différentes options, et peut le cas échéant sur la base de ces contrôles forcer la saisie du code personnel du titulaire en imposant l'utilisation de l'option B au lieu de l'option A. Ces conditions seront explicitées plus loin, en relation en particulier avec la gestion des erreurs par le système.

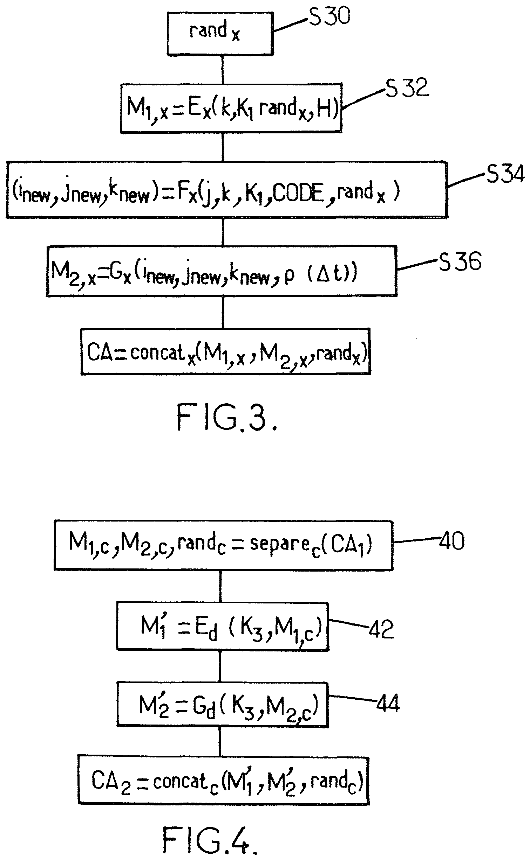

La génération du code d'accès par le moyen d'authentification pour l'option x comporte, figure 3, les étapes suivantes :

- Génération, étape S30, d'un nombre pseudo-aléatoire $rand_x$ ;
- calcul, étape S32, d'un premier nombre $M_{1,x}$ par une fonction $E_x$ ayant comme paramètres d'entrée une des variables d'état k, le secret $K_1$ et le nombre aléatoire $rand_x$, soit :

$$M_{1,x} = E_x(k, K_1, rand_x) \text{ (équation 1)}$$

- calcul, étape S34, de nouvelles valeurs $i_{new}$, $j_{new}$, $k_{new}$ pour les variables d'état i, j, k par une fonction $F_x$ ayant comme paramètres d'entrée les variables d'état j, k, le secret $K_1$, le nombre aléatoire $rand_x$ et un nombre CODE omis dans l'option A, ainsi qu'éventuellement une fonction de numéro de série SN() liée au moyen d'authentification, soit :

$$(i_{new}, j_{new}, k_{new}) = F_x(j, k, K_1, CODE, SN(), rand_x) \text{ (équation 2)}$$

- calcul, étape S36, d'un second nombre $M_{2,x}$ par une troisième fonction $G_x$ ayant comme paramètres d'entrée les variables d'état nouvellement calculées $i_{new}$, $j_{new}$, $k_{new}$ et le résultat d'une fonction temporelle p d'un intervalle de temps $\Delta t$ entre un temps de référence et le temps d'exécution du calcul du code d'accès, soit :

$$M_{2,x} = G_x(i_{new}, j_{new}, k_{new}, \rho(\Delta t)) \text{ (équation 3)}$$

- calcul, étape S38, du code d'accès par une fonction $concat_x(M_{1,x}, M_{2,x}, rand_x)$ permettant de générer $M_{1,x}$, $M_{2,x}$, $rand_x$ à partir du code d'accès. $concat_x$ est une fonction bijective de concaténation de ses paramètres d'entrée, dont l'inverse est la fonction notée $separe_x$. $concat_x$ peut, de façon optionnelle, posséder des propriétés cryptographiques telles que la mise en oeuvre d'un algorithme de cryptage à clé symétrique si l'analyse de sécurisation faite dans le cadre d'une implémentation le recommande. D'autre part, $concat_x$ peut éventuellement procéder à la concaténation de ses paramètres d'entrée par entrelacement de bits, et ce afin qu'avantageusement, une erreur de saisie du code d'accès par le titulaire n'impacte pas un paramètre d'entrée indépendamment des autres.

L'indice x symbolise l'option A, B ou C ainsi $E_a$ correspond à la version de la fonction E utilisée pour l'option A.

De façon générale, les fonctions $E_x$, $F_x$ et $G_x$ sont des fonctions à sens unique c'est-à-dire que la connaissance du résultat ne permet pas de remonter aux paramètres d'entrée. Les fonctions de hachage sont des exemples de fonction à sens unique bien connus en cryptographie.

Les fonctions $E_x$, $F_x$ et $G_x$ ne sont pas secrètes (elles sont notamment connues du moyen d'authentification et de l'entité d'authentification).

Les fonctions $E_x$ servent en particulier à vérifier que l'émetteur du code d'accès dispose bien du moyen d'authentification.

Chaque étape va maintenant être décrite en détail, en particulier dans ses particularités de fonctionnement en fonction du type d'option choisi.

Pour l'équation 1, $E_a$ et $E_b$ ne sont fonction ni de i ni de j, $E_c$ n'est fonction d'aucune des variables d'état, c'est-à-dire ni de i ni de j ni de k.

Il est à noter que si $E_a$ ou $E_b$ étaient fonction de j, il serait possible, après une tentative d'attaque infructueuse sur l'option B, de faire une attaque en force brute du secret personnel du titulaire, par itération multiple sur l'état interne initial. Cette attaque ne serait pas détectable par l'entité d'authentification puisque, j ayant été mis à jour par l'entité d'authentification suite à la première tentative infructueuse comme il sera vu par la suite, $MM_1$ est inexact tant que le secret personnel utilisé pour l'attaque est inexact.

D'autre part, si $E_a$ était fonction de j, la désynchronisation de cet état interne serait dommageable à l'usage du titulaire (risque de perte d'une étape).

De même, si $E_c$ était fonction de k, la désynchronisation de cet état interne serait dommageable à l'usage du titulaire (risque de perte d'une étape). A contrario, il n'est pas gênant que $E_c$ ne soit pas fonction de k, puisque

- pour que $MM_1$ soit exact pour l'option C en cas de transmission via le client d'authentification, il faut que ce soit le client d'authentification du titulaire ; et
- il n'est pas possible pour un attaquant de tester une valeur du secret personnel du titulaire avec l'option C sans disposer du client d'authentification du titulaire.

Pour l'équation 2, les fonctions $F_x$ servent à la mise à jour des états internes i, j et k avec la particularité suivante.

$F_a$ renvoie une valeur simple et ne met à jour que l'état interne i. $F_b$ renvoie un couple de valeurs et ne met à jour que i et j. $F_c$ renvoit un triplet de valeurs et met à jour i, j et k. Par ailleurs, $F_a$ n'est pas fonction de i et $F_b$ n'est fonction ni de i ni de j, $F_c$ n'est fonction ni de i, ni de j, ni de k. Autrement dit, les fonctions $F_x$ n'ont pas en paramètre d'entrée la(es) variable(s) d'état qu'elles mettent à jour.

Il est avantageux que la mise à jour ait lieu avant le calcul du code d'accès afin de minimiser les conséquences d'une désynchronisation pour le titulaire. Comme on le verra ci-dessous, le moyen d'authentification met à jour ses états internes inconditionnellement lors de chaque génération de code d'accès, alors que l'entité d'authentification ne met à jour, en général, les états internes correspondants que si l'authentification est réussie.

Le nombre CODE correspond à une constante e ou à une valeur hachée du code secret c saisi par l'utilisateur lors de l'utilisation des modes B ou C. Il est à noter qu'avec l'option A, la fonction $F_a$ n'utilise pas nécessairement e comme paramètre.

La mise à jour des états internes se fait donc à la fois

- d'une façon aléatoire (usage de $rand_x$) observable via le code d'accès transmis ;
- d'une façon déterministe mais secrète par l'usage des secrets K1 et c, voire j et k, mais non-observable via le code d'accès transmis

Ainsi,

- la mise à jour correcte de i avec l'option A nécessite la connaissance de j, k et K1 (les arguments secrets de Fa) ;
- la mise à jour correcte de i et j avec l'option B nécessite la connaissance de k, K1 et c ;
- la mise à jour correcte de i, j et k avec l'option C nécessite la connaissance de K1, K3 et c.

Concernant l'équation 3, les fonctions $G_x$ sont à sens unique et dépendent toutes des mêmes arguments $i_{new}$, $j_{new}$, $k_{new}$ et $\rho(\Delta t)$.

La seule contrainte supplémentaire portant sur le choix des fonctions $F_x$ et $G_x$ est que leur composition multiple $G_{x(n)} \circ F_{x(n)} \circ G_{x(n-1)} \circ F_{x(n-1)} \circ \ldots$ ne converge pas vers un point fixe (ou un cycle) quelle que soit la suite $(x(n), x(n-1), \ldots)$ sélectionnée par les usages du titulaire. Cette contrainte n'en est pas vraiment une si on utilise des fonctions de hachage sûres (éventuellement tronquées) en tant que fonctions à sens unique, telles que MD5, SHA256, etc. Il convient d'ailleurs de noter que les arguments de ces fonctions ne convergent pas sur un sous-ensemble quelconque car on introduit un nombre aléatoire $\text{rand}_x$ à chaque génération d'un code d'accès, et donc que les résultats de ces fonctions n'ont guère de risque de converger sur une valeur ou sur un cycle de valeurs si la composition des fonctions ne converge pas elle-même au sens fonctionnel.

La valeur $\Delta t$ est définie comme l'intervalle de temps séparant une demande de code d'accès précédente $t_{ref}$ et la demande actuelle $t$.

La fonction $\rho$ est une fonction de $\Delta t$ définie à partir d'une seconde fonction $\lambda$ de la façon suivante :

$$\lambda(\Delta t) = E(\Delta t / \delta_2) \bmod N_2 \quad \text{(équation 4)}$$

$$\rho(\Delta t) = \lambda(\Delta t) \text{ si } \lambda(\Delta t) \leq \gamma_M, \text{ et } \rho(\Delta t) = \lambda(\Delta t) + \sigma \text{ sinon (équation 5)}$$

où $\gamma_M$, $\delta_2$, $N_2$ et $\sigma$ sont des entiers strictement positifs. $\delta_2$ est le pas de codage et $\delta_2.N_2$ est la pseudo période de $\lambda$. En pratique, $N_2$ peut être choisi arbitrairement grand, par exemple comme le plus grand entier représentable par le moyen d'authentification, et peut donc être omis dans les calculs ci-dessous. $E()$ désigne ici l'arrondi à l'entier inférieur. $\sigma$ est choisi arbitrairement et suffisamment grand, c'est-à-dire supérieur à $\gamma_M + \beta$, où $\gamma_M$ et $\beta$ sont des entiers strictement positifs définis précisément dans la suite de cette description.

Au vu des équations 1 à 3, on conçoit qu'au plus 4 paramètres sont mis à jour à chaque demande de code d'accès : $i$, $j$, $k$ et $t_{ref}$ qui prend comme valeur le temps correspondant à cette demande de code d'accès. Aussi, si le moyen d'authentification détecte que le code d'accès n'a pas été utilisé, par exemple parce que l'utilisateur a appuyé sur une touche d'annulation, ces 4 paramètres sont maintenus dans leur état antérieur à la demande de code d'accès.

Dans le cas de l'option C, figure 4, le code d'accès généré par le moyen d'authentification est transféré au client d'authentification.

Le client d'authentification calcule, étape S40, les nombres $(M_1 ; M_2 ; \text{rand})$ en appliquant la fonction $\text{separe}_c$ au code d'accès, puis calcule les nombres :

- $M'_1$, étape S42, comme valant $E_d(K_3 ; M_{1,c})$, c'est-à-dire $Ed(k ; K_1 ; K_3 ; \text{rand}_c)$ si le code d'accès a été saisi correctement et qu'il s'agit bien du client d'authentification du titulaire ;
- $M'_2$, étape S44, comme valant $G_d(K_3 ; M_{2,c})$, c'est-à-dire $G_d(i_{new} ; j_{new} ; k_{new} ; K_3 ; \rho(\Delta t))$ sous les mêmes conditions.

Le code d'accès $CA_2$ transmis par le client d'authentification est alors $\text{concat}_c(M'_1 ; M'_2 ; \text{rand}_c)$, étape S46.

$K_3$ est le secret associé au client d'authentification. Le code d'accès étant transmis par des moyens électroniques à l'entité d'authentification, il n'y a pas de limitation contraignante sur la taille du code d'accès calculé et transmis par le client d'authentification. De ce fait, les fonctions $G_d$ et $E_d$ peuvent être, selon les implémentations de l'invention, soit des fonctions à sens unique connues à la fois du client d'authentification et de l'entité d'authentification, soit des fonctions de signature du message $M'_1$, respectivement $M'_2$, avec une méthode de cryptographie asymétrique où $K_3$ joue le rôle de clé privée $sK_3$. Dans ce second cas, l'entité d'authentification possède la clé publique $pK_3$ associée à $sK_3$ afin de vérifier la validité des signatures, c'est-à-dire ici, celle du code d'accès transmis.

L'avantage de la cryptographie asymétrique, par rapport à l'emploi de fonctions à sens unique et de secrets connus du client d'authentification et de l'entité d'authentification, réside dans le fait qu'il est sûr même en cas de compromission de l'entité d'authentification (l'entité d'authentification n'a pas les moyens de générer $M'_1$ ni $M'_2$, mais uniquement de vérifier qu'ils sont corrects). Moyennant la sécurisation adéquate mais classique du gestionnaire d'authentification, on peut donc faire reposer sur l'authentification par l'option C des opérations très sensibles pour la sécurité globale du système (par exemple, changement du code secret personnel du titulaire, gestion du moyen d'authentification du titulaire, etc.).

L'utilisation de la cryptographie asymétrique peut être étendue aux options A et B dans des implémentations de l'invention où le code d'accès généré par le moyen d'authentification est transmis à l'entité d'authentification sans saisie ni dictée par le titulaire, ou avec des méthodes de signature jugées suffisamment courtes dans le cadre d'une implémentation pour que le code d'accès généré puisse être transmis à l'entité d'authentification par le titulaire.

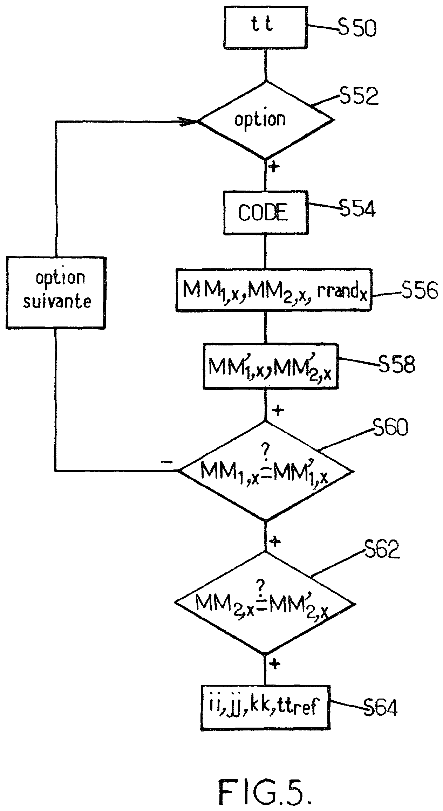

L'entité d'authentification vérifie, figure 5, le code d'accès reçu en effectuant les étapes suivantes :

- mesure, étape S50, du temps courant de l'horloge système de l'entité d'authentification et on note tt sa valeur ;
- boucle, étape S52, sur le type d'option sachant que si le code d'accès a été transmis par le client d'authentification, la boucle se réduit à l'option C. Sinon, l'entité teste l'option B, puis A, puis C.

   o détermination, étape S54, de CODE en fonction de l'option. Pour l'option A, CODE n'est pas utilisé ou est une constante et pour les autres options c'est la valeur hachée du code secret ;
   ◦ calcul, étape S56, des nombres ($MM_{1,x}$, $MM_{2,x}$, $rrand_x$) en appliquant la fonction $separe_x$ au code d'accès ;
   ◦ calcul, étape S58, des valeurs $MM'_{1,x}$, $MM'_{2,x}$ en utilisant les fonctions $E_x$ et $G_x$ et les secrets détenus par l'entité d'authentification, secrets symétriques de ceux détenus par le moyen d'authentification et, pour l'option C, le client d'authentification. On utilise également l'intervalle de temps $\Delta tt$ entre un temps de référence possible $tt_{ref}$ de l'entité d'authentification et le temps tt et on calcule les nouvelles variables d'état ii, jj et kk avec la fonction $F_x$ ;
   ◦ vérification, étapes S60, S62, que $MM_{1,x}$, $MM_{2,x}$ et $MM'_{1,x}$, $MM'_{2,x}$ correspondent. Cette étape et la précédente correspondent classiquement à la vérification d'un code dans de la cryptographie symétrique à clé secrète ;
   ◦ si le code d'accès est validé, outre l'accès au service, l'entité d'authentification met à jour, étape S64, ses variables internes ii, jj, kk et $tt_{ref}$ de façon à rester synchronisée avec le moyen d'authentification.

On conçoit qu'un élément particulièrement sensible du système est le maintien de la synchronisation des moyens d'authentification avec l'entité d'authentification.

Pour cela, sera expliqué dans un premier temps le problème de la synchronisation des horloges et donc des temps $t_{ref}$, $tt_{ref}$, t et tt permettant d'obtenir un intervalle de temps ayant une valeur commune entre les deux. En particulier, il est avantageux que le système soit robuste à des décalages entre les horloges.

Soient

- $P_{min}$ le délai minimum de transmission d'un code d'accès à l'entité d'authentification soit le temps de saisie par le titulaire plus le délai de transmission, dans une implémentation où le titulaire doit saisir le code d'accès ;
- $P_{val}$ le délai pendant lequel un code d'accès généré est considéré comme valide ;
- $P_{max}$ le délai, supérieur à $P_{val}$, au-delà duquel il est raisonnable de penser que le titulaire ne transmettra pas le code d'accès s'il ne l'a pas fait auparavant, sachant que ce code n'est plus valide ;
- $t_m$ le délai minimal, et $t_M$ le délai maximal où il est raisonnable de penser que le titulaire fera une seconde tentative d'authentification si la première a échoué.

Notons

- $\alpha = E((P_{val} - P_{min}) / \delta_2)$ ;
- $\beta = E((P_{max} - P_{min}) / \delta_2)$;
- $\gamma_m = E(t_m / \delta_2)$;
- $\gamma_M = E(t_M / \delta_2)$

On a $\Delta t = \Delta tt + \Delta_0 - \Delta_t$, où $\Delta_t = tt - t$ et $\Delta_0 = tt_{ref} - t_{ref}$.

On en déduit que $\lambda(\Delta t) = \lambda(\Delta tt) + E(\Delta)$, où $\Delta = (r + \Delta_0 - \Delta_t) / \delta_2$ et $0 \leq r < \delta_2$.

On suppose $P_{min} < \Delta_0 < P_{val}$.

Trois situations peuvent se présenter :

- Si le code d'accès est reçu pendant le délai de validité par l'entité d'authentification, c'est-à-dire $P_{min} < \Delta_t < P_{val}$, on a $E(-(P_{val} - P_{min}) / \delta_2) < E(\Delta) < 1 + E((P_{val} - P_{min}) / \delta_2)$ et finalement $-\alpha \leq E(\Delta) \leq \alpha$, puisque $E(\Delta)$ est un entier.
- Si le code d'accès est reçu après le délai de validité mais avant le délai maximal de saisie, c'est-à-dire $P_{val} < \Delta t < P_{max}$, on a $E(-(P_{max} - P_{min}) / \delta_2) < E(\Delta) < 1$ et finalement $-\beta \leq E(\Delta) \leq 0$ puisque $E(\Delta)$ est un entier.
- Enfin, si $\Delta t$ est compris entre $t_m$ et $t_M$ secondes, on a $\gamma_m \leq \lambda(\Delta 1) \leq \gamma_M$

Réciproquement, si $\lambda(\Delta t) - \lambda(\Delta tt)$ est égal à un entier relatif a, alors

$$E((r + \Delta_0 - \Delta_t) / \delta_2) = a,$$

c'est-à-dire

$$a \leq (r + \Delta_0 - \Delta_t) / \delta_2 < a+1$$

d'où

$$P_{min} - (1+a) . \delta_2 < \Delta_t < P_{val} + (1-a) . \delta_2$$

Cela se traduit de la façon suivante pour les 3 situations examinées ci-dessus :

- Si l'entité d'authentification reconnaît comme valide un code d'accès tel que $-\alpha \leq E(\Delta) \leq \alpha$, alors un code d'accès reçu après $P_{val} + (1+\alpha).\delta_2$ ne sera pas considéré comme valide.
- Si l'entité d'authentification reconnaît comme authentique, quoique périmé, un code d'accès tel que $-\beta \leq E(\Delta) \leq -\alpha-1$, alors un code d'accès reçu après $P_{max} + (1+\beta).\delta_2$ ne sera pas considéré comme authentique.
- Si l'entité d'authentification reconnaît comme valide un code d'accès tel que $\gamma_m \leq \lambda(\Delta t) \leq \gamma_M$, alors la validité d'un code d'accès est garantie même en cas de désynchronisation, s'il a été généré dans un délai compris entre $\gamma_m. \delta_2$ et $(\gamma_M+1).\delta_2$ après la génération précédente de code d'accès.

Par ailleurs, si le code d'accès est reçu après $P_{val}$, il faut effectuer une correction sur tt, afin que lors de la réception du code d'accès suivant, la condition $P_{min} < \Delta_0 < P_{val}$ continue d'être valide. Cela est le cas si $\lambda(\Delta t) - \Delta(\Delta tt)$ est égal à un entier relatif a tel que $P_{val} \leq P_{min} - (1+a).\delta_2$, c'est-à-dire si $a \leq -\alpha-1$. Donc pour $a \in [-\beta ; -\alpha-1]$, tt est mis à jour en fin des opérations de vérification du code d'accès avec la valeur $tt+(a+\alpha).\delta_2$. Il est à noter que cette correction :

- ne détecte pas tous les cas de saisie hors délai, car la saisie entre $P_{val}$ et $P_{max}$ peut résulter en $E(\Delta) \in [-\beta;0]$ ; or, une saisie hors délai non détectée crée une «perturbation» pouvant résulter à l'étape suivante, quoique de façon peu probable, en un rejet d'un code d'accès valide et saisi dans les délais. On peut cependant se prémunir de ce problème en acceptant comme valide un code tel que $E(\Delta)=\alpha+1$, ce qui représente un calcul supplémentaire pour l'entité d'authentification ;
- ne maîtrise pas totalement ou systématiquement la perturbation lorsque la saisie hors délai est détectée et corrigée comme indiqué ci-dessus. On peut cependant se prémunir en pratique de ce problème en acceptant comme valide un code tel que $E(\Delta) \in [\alpha+1; \beta]$ lorsqu'une correction de tt a été réalisée au cours de l'une des deux tentatives d'authentification précédentes où le code d'accès a été reconnu comme authentique, ce qui représente un supplément de calcul négligeable pour l'entité d'authentification, cette situation ayant une probabilité faible.

Enfin, comme $\sigma > \gamma_M+\beta$, la troisième situation examinée ci-dessus est parfaitement distinguable des deux autres. Si cette condition n'était pas remplie, deux des situations ci-dessus pourraient ne pas être distinguables dans certains cas, amenant ainsi l'entité d'authentification à décider arbitrairement si le code d'accès est valide quoi que non synchronisé ou bien saisi hors délai donc non valide, et donc également à décider arbitrairement d'effectuer ou non la correction de $tt_{ref}$.

La précision absolue de l'horloge du moyen d'authentification est inutile, puisque l'on ne s'intéresse qu'à des différences de temps ; de même, le déphasage entre les horloges du moyen d'authentification et de l'entité d'authentification n'a pas d'importance puisqu'il se simplifie dans tous les calculs de différence.

La précision relative de l'horloge du moyen d'authentification sur des durées longues n'est pas non plus nécessaire, car soit le titulaire aura utilisé le moyen d'authentification dans cet intervalle, soit - au pire - le premier code d'accès ne sera pas reconnu comme authentique.

Il est en revanche important que la précision relative de l'horloge du moyen d'authentification sur une période de l'ordre de celle de l'utilisation « normale » du moyen d'authentification par le titulaire garantisse que le déphasage maximal introduit entre les horloges du moyen d'authentification et de l'entité d'authentification soit au maximum de l'ordre de $P_{val}$. En pratique, cela ne met aucune contrainte véritable sur cette horloge.

Outre les problèmes liés à la synchronisation des horloges résolus par les moyens présentés précédemment, on conçoit que dans un environnement de production, le système doit être également robuste aux erreurs de manipulation et aux tentatives d'attaque qui génèrent des désynchronisations des variables d'état i, j, k tout en préservant la sécurité du code d'accès.

Pour cela, dans le mode de réalisation présenté, on utilise un mélange des options A, B et C, la conservation des historiques d'utilisation des codes d'accès et la mise à jour des états i, j, k selon certaines conditions.

Le moyen d'authentification possède un drapeau options.

Si les options B ou C sont employées, le drapeau option$_B$ est mis à la valeur FAUX.

Si le moyen d'authentification a connaissance du fait que la tentative d'authentification utilisant le code d'accès généré a échoué pour l'option A (par exemple, le titulaire peut disposer d'une option sur le moyen d'authentification pour indiquer que la tentative d'authentification a échoué), l'état interne options est mis à la valeur VRAI.

L'option B est forcée (se substituant ainsi à l'option A choisie par le titulaire) dans plusieurs cas :

- Echec d'une tentative d'authentification avec l'option A : si la cause de cet échec était une désynchronisation de l'état interne j entre le moyen d'authentification et l'entité d'authentification, l'emploi de l'option B permet la resynchronisation. Ce cas n'est pas contrôlé par l'entité d'authentification (pas de rejet d'un code d'accès généré avec l'option A après un échec d'authentification quelle que soit l'option) ;
- Nombre d'usages consécutifs de l'option A excédant un seuil fixé à la conception du système. Cela vise à limiter le nombre de codes d'accès valides qu'il est possible de générer sans saisir le secret personnel du titulaire, notamment en cas de vol du moyen d'authentification. Optionnellement et en complément, l'accès au moyen d'authentification peut être restreint par un mot de passe simple. Un second but de ce contrôle est de garantir un rythme de rafraîchissement minimal pour l'état interne j. Un contrôle similaire est effectué par l'entité d'authentification, avec un seuil légèrement moins contraignant afin de ne pas provoquer d'échec de l'authentification au cas où l'option B ne serait pas forcée assez tôt du côté du moyen d'authentification ;
- Nombre d'usages consécutifs de l'option A dans un laps de temps fixé supérieur à un seuil fixé à la conception du système. Le but est similaire, ce contrôle visant plus spécifiquement à bloquer le « stockage préventif » de codes d'accès avec l'option A en cas de vol du moyen d'authentification. Ce contrôle est également réalisé par l'entité d'authentification qui vérifie que le nombre de tentatives d'authentification consécutives faites avec des codes d'accès authentiques générés pour l'option A tels que $\lambda \in [\gamma_m ; \gamma_M]$ n'excède pas un seuil fixé à la conception du système.

En cas d'échecs successifs - et en nombre suffisant - de l'option B qui ne peuvent résulter que d'erreurs répétées sur la saisie de l'identifiant du titulaire ou d'un blocage de l'option B, le moyen d'authentification propose au titulaire de régénérer les secrets du moyen d'authentification de façon à débloquer l'option B. Le nombre de possibilités de déblocages avec 2 facteurs d'authentification (moyen d'authentification et code secret personnel du titulaire) est lui aussi contrôlé par l'entité d'authentification grâce à l'état interne erreurcode$_B$ et limité à une valeur légèrement supérieure à celle de seuilcode$_B$. Au-delà de cette valeur, l'option B ne peut plus être débloquée grâce au seul moyen d'authentification, le titulaire doit pour ce faire utiliser l'option C et le client d'authentification.

Les contrôles présentés ci-dessus permettent en particulier - ce n'est pas leur seul objectif - de contrôler le rythme de rafraîchissement des états internes. Il faut de plus veiller à ce que la probabilité qu'un code d'accès déjà généré puisse être de nouveau généré par le moyen d'authentification soit infime, et à le rejeter si un tel code est proposé pour une authentification car il s'agira de façon presque sûre d'une tentative d'attaque.

Pour l'option C, le nombre de triplets (i,j,k) possibles - c'est-à-dire le nombre de codes d'accès en supposant $K_1$, c, $\lambda(\Delta t)$ fixés - est égal, si la fonction $G_c$ et la génération des nombres aléatoires rand$_c$ sont bien implémentées, à Rand$_c$ le nombre de mots aléatoires rand$_c$ possibles. Les implémentations doivent donc, d'une part choisir Rand$_c$ suffisamment grand, d'autre part contrôler au niveau du client d'authentification que la fréquence de renouvellement du code secret c est suffisante, par exemple en forçant un renouvellement de c après un nombre de connexions au client d'authentification égal à Rand$_c$ / $P_c$, où $P_c$ est un seuil à fixer à la conception du système. Si le moyen d'authentification ne stocke pas les valeurs de rand$_c$ utilisées entre deux renouvellements de c, $P_c$ devra être fixé de telle sorte que la probabilité de générer un deuxième fois la même valeur de rand$_c$ soit infime. Le « théorème des anniversaires » indique que ce seuil est faible, aussi, dans des implémentations où Rand$_c$ est lui-même relativement faible, et pour éviter une fréquence de renouvellement trop rapide de c, on préfèrera utiliser pour la génération de rand$_c$ un générateur pseudo-aléatoire dont les caractéristiques garantissent que l'on peut générer une grande partie des Rand$_c$ valeurs de rand$_c$ possibles sans risque de collision. L'entité d'authentification stocke alors les codes d'accès générés avec l'option C (ou les mots aléatoires rand$_c$) entre deux renouvellements de c et refuse un code d'accès déjà utilisé (ou un code d'accès généré avec un mot aléatoire rand$_c$ déjà utilisé).

Pour l'option B, le nombre de couples (i,j) possibles - c'est-à-dire le nombre de codes d'accès en supposant k, K1, c, $\lambda(\Delta t)$ fixés - est égal, si la fonction $G_b$ et la génération des nombres aléatoires rand$_B$ sont bien implémentées, à Rand$_B$ le nombre de mots aléatoires rand$_B$ possibles. Les implémentations doivent donc, d'une part choisir Rand$_B$ suffisamment grand, d'autre part contrôler que la fréquence de renouvellement de k - a minima - est suffisante. L'entité d'authentification stocke alors les codes d'accès générés avec l'option B (ou les mots aléatoires rand$_B$) entre deux renouvellements de k et refuse un code d'accès déjà utilisé (ou un code d'accès généré avec un mot aléatoire rand$_b$ déjà utilisé).

Pour l'option A, le nombre d'états internes i possibles - c'est-à-dire le nombre de codes d'accès en supposant j, k, K1, c, $\lambda(\Delta t)$ fixés - est égal, si la fonction $G_a$ et la génération des nombres aléatoires $rand_A$ sont bien implémentées, à $Rand_A$ le nombre de mots aléatoires $rand_A$ possibles. Les implémentations choisissent donc, d'une part $Rand_A$ suffisamment grand, et contrôlent d'autre part que la fréquence de renouvellement de j - a minima - est suffisante, ce qui est fait ci-dessus par un des mécanismes de contrôle forçant l'emploi de l'option B. L'entité d'authentification stocke les codes d'accès générés avec l'option A (ou les mots aléatoires $rand_A$) entre deux renouvellement de j et refuse un code d'accès déjà utilisé (ou un code d'accès généré avec un mot aléatoire $rand_A$ déjà utilisé).

Ainsi, la synchronisation des états internes i, j, k et $t_{ref}$ entre le moyen d'authentification et l'entité d'authentification est assurée par plusieurs moyens :

- Le passage à une option «supérieure», par exemple de l'option A vers l'option B (c'est-à-dire resynchronisant davantage d'états internes parmi i, j, k) en cas d'échec de l'authentification ;
- Le stockage par l'entité d'authentification dans une pile de données $\Pi$ des instants de réception de codes d'accès pour les quels M1 est correct mais M2 est faux ;
- La détection de codes d'accès authentiques mais reçus hors délai par l'entité d'authentification, ou ne correspondant pas à l'option nécessaire;
- La mise à jour des états internes par l'entité d'authentification conditionnée à la fourniture d'un code d'accès authentique ;
- L'autorisation limitée de codes d'accès pour lesquels $\lambda \in [\gamma_m ; \gamma_M]$, c'est-à-dire générés tout de suite après un autre code d'accès pour tenir compte du cas où ce premier code d'accès n'a pas été reçu par l'entité d'authentification.

Cette palette de moyens permet d'éviter toute désynchronisation en cas d'erreur de manipulation unitaire par le titulaire, à savoir

- la non transmission d'un code d'accès généré quand le titulaire l'indique au moyen d'authentification, si une telle option existe ;

- la transmission incorrecte du code d'accès généré ou de l'identifiant du titulaire pour le service requérant l'authentification. Dans ces cas, l'entité d'authentification ne reçoit pas le code d'accès, ou ne le reconnaît pas comme émanant du titulaire.

- la saisie d'un code personnel incorrect pour l'emploi des options B, ou C

- la transmission hors délai d'un code d'accès

- l'emploi d'une option erronée

En cas de désynchronisation résultant d'une erreur de manipulation multiple, la resynchronisation est garantie, dans le pire cas, lors de la seconde tentative d'authentification correcte réalisée par le titulaire.

Cette palette de moyens permet d'autre part d'éviter toute désynchronisation du fait d'une tentative d'accès

- si l'attaquant possède le moyen d'authentification ou un duplicata, mais pas le secret personnel du titulaire ou le client d'authentification du titulaire, y compris pour l'option A car la pile de données $\Pi$ n'est pas vidée en cas de réussite de l'authentification avec l'option A ; et a fortiori
- si l'attaquant ne possède pas le moyen d'authentification.

On conçoit cependant qu'une désynchronisation éventuelle ainsi que la protection contre les attaques font que, du côté de l'entité d'authentification, l'algorithme de vérification du code d'accès est modifié pour prendre en compte ces aléas.

On fait varier x, n, $\lambda$ dans des boucles algorithmiques concentriques (la plus profonde étant celle sur x, puis sur n, puis sur $\lambda$) dans leur ensemble de définition respectif :

- x désigne l'option de génération de code d'accès, parmi la seule option C si le code d'accès a été transmis par le client d'authentification, et successivement B, A, C, sinon ;
- l'indice n de $\Delta tt_n = tt - tt_{\Pi,n}$ pour chaque valeur $tt_{\Pi,n}$ stockée dans $\Pi$, en commençant par la valeur stockée le plus récemment (désignée jusqu'ici comme $tt_{ref}$);
- $\lambda$ avec les valeurs entières positives ou nulles successives parmi

  ○ $[\sigma + \lambda(\Delta tt_n) - \alpha ; \sigma + \lambda(\Delta ttn) + \alpha + 1]$

○ $[\gamma_m ; \gamma_M]$ pour les options B et C

○ $[\sigma+\lambda(\Delta tt_n)+\alpha+2 ; \sigma+\lambda(\Delta tt_n)+\beta]$ uniquement dans le cas où une correction de $tt_{ref}$ a été effectuée lors de l'une des deux tentatives d'authentification précédentes où le code d'accès a été reconnu authentique

○ $[\sigma+\lambda(\Delta tt_n)- \beta ; \sigma+\lambda(\Delta tt_n)-\alpha-1]$

Malgré la complexité apparente, le nombre de calculs effectués par l'entité d'authentification reste très limité en pratique pour un usage normal du moyen d'authentification :

- 1 à 3 calculs de $MM_{1,x}$ pour déterminer l'option x employée pour générer le code d'accès car on ne regarde pas les options suivantes dès lors qu'une concordance pour $MM_{1,x}$ a été trouvée ;
- 1 à 2a+1 calculs de $MM_{2,x,n,\lambda}$ pour déterminer la valeur correcte de $\lambda$ (un choix de paramètres tels que a=1 est possible et de ce fait pertinent)

Les calculs peuvent être plus nombreux :

- en cas de saisie hors délai du code d'accès : jusqu'à $\beta-\alpha$ calculs de $MM_{2,x,n,\lambda}$ supplémentaires, c'est-à-dire 2 pour un choix typique des paramètres ;
- en cas d'utilisation du moyen d'authentification par l'attaquant pour générer des codes d'accès successifs avec l'option A : jusqu'à $(2\alpha+1)*seuil_A$ calculs supplémentaires où $seuil_A$ est le nombre maximal de code d'accès successifs générés avec l'option A acceptés par l'entité d'authentification ;
- en cas de tentatives d'attaques après vol du moyen d'authentification, ou en cas de saisie incorrecte du code secret personnel par le titulaire : jusqu'à $(2\alpha+1)*(seuil_{codeA}+seuil_{codeB})$ calculs supplémentaires, voire $(2\alpha+1)*(seuil_{codeA}+seuil_{codeB}+seuil_{codeC})$ si l'utilisateur, attaquant ou titulaire, dispose également du client d'authentification du titulaire. $seuil_{codeX}$ désigne le nombre maximal d'erreurs consécutives (au sein de l'option x) acceptées par l'entité d'authentification avant de bloquer l'usage de cette option ;

Ces nombres se multiplient lorsque les causes se cumulent, mais comme elles sont indépendantes les unes des autres, la probabilité d'occurrence de tels cumuls est faible. En tout état de cause, la seule cause de calculs supplémentaires pouvant être directement induite par un attaquant disposant du moyen d'authentification du titulaire est celle conduisant à réaliser dans le pire cas $(2\alpha+1)*(seuil_{codeA}+seuil_{codeB})$ calculs supplémentaires, ce qui est insuffisant pour mener une attaque en déni de service sur le système d'authentification objet de cette invention s'il est correctement dimensionné.

A l'intérieur de ces boucles, on effectue les étapes suivantes :

- CODE prend la valeur e pour l'option A, et H(cc), la valeur hachée du code secret, pour les options B et C.
- On calcule les nombres $(MM_{1,x} ; MM_{2,x} ; rrand_x)$ en appliquant la fonction $separe_x$ au code d'accès. Lorsque le code d'accès est obtenu par l'entité d'authentification via le client d'authentification, la fonction $separe_c$ fournit $MM'_1$ et $MM'_2$ ; $MM_1$ et $MM_2$ sont alors calculés à partir respectivement de $MM'_1$ et $MM'_2$ en utilisant la méthode de cryptographie asymétrique et la clé publique pK3 ou le secret symétrique K3.
- Un nombre entier noté $MM'_{1,x}$ est calculé comme valant $E_x(kk ; K_1 ; rrand_x)$
- Vérification de la validité de $MM_{1,x}$

    ○ seuil est initialisé à $seuil_{min}$ ;
    ○ si $tt - tt_{last} < seuil$ et que le code d'accès n'a pas été transmis via le client d'authentification,

        ▪ si $MM'_{1,x}$ et $MM_{1,x}$ sont égaux pour une option x et que $rand_x$ n'a pas déjà été utilisé pour cette option, $erreur_{M1}$ est mis à zéro, seuil est mis à $seuil_{min}$, $tt_{last}$ est mis à tt, tt est ajouté à la pile de données $\Pi$. L'ajout de tt dans la pile limite l'impact éventuel de ce mécanisme sur le titulaire en évitant toute désynchronisation du moyen d'authentification par rapport à l'entité d'authentification ;

        ▪ sinon, $erreur_{M1}$ est incrémenté et, si $erreur_{M1} \geq seuil_{M1}$, seuil est mis à la valeur maximale permise par l'implémentation;

        ▪ dans tous les cas, l'authentification est rejetée et les opérations de vérification du code d'accès sont stoppées. Ce mécanisme vise à empêcher toute attaque par force brute du code d'accès en rejetant sans l'examiner tout code d'accès si le délai depuis l'examen du dernier code d'accès est inférieur à seuil.

    ○ si $tt - tt_{last} \geq seuil$ ou que le code d'accès a été transmis via le client d'authentification,.

        ▪ si $MM'_{1,x}$ et $MM_{1,x}$ sont égaux pour une option x et que $rand_x$ n'a pas été utilisé pour cette option, $erreur_{M1}$

est mis à zéro, seuil à $seuil_{min}$, $tt_{last}$ à $tt$ et les opérations de vérification du code d'accès continuent comme décrit ci-dessous ;

- sinon, $erreur_{M1}$ est incrémentée, l'authentification est rejetée, les opérations arrêtées et si $erreur_{M1} \geq seuil_{maxM1}$, seuil est mis à la valeur maximale permise par l'implémentation..

- si l'indice x correspond à l'option A et que la valeur de $erreur_{codeA}$ est supérieure à $seuil_{codeA}$, les opérations de vérification du code d'accès sont arrêtées, l'authentification est rejetée ;
- si l'indice x correspond à l'option B et que la valeur de $erreur_{codeB}$ est supérieure à $seuil_{codeB}$, les opérations de vérification du code d'accès sont arrêtées, l'authentification est rejetée ;
- si l'indice x correspond à l'option C, que le code d'accès a été fourni via le client d'authentification, et que la valeur de $erreur_{codeC}$ est supérieure à $seuil_{codeC}$, les opérations de vérification du code d'accès sont arrêtées, l'authentification est rejetée.
- $(ii_{new} ; jj_{new} ; kk_{new})$ sont calculés (pour chaque nouvelle valeur de x) avec la valeur $F_x(jj ; kk ; K1 ; code ; SN() ; rrand_x)$ comme expliqué précédemment.
- un nombre noté $MM'_{2,x,n,\lambda}$ est calculé comme valant $G_x(ii_{new} ; jj_{new} ; kk_{new}; \lambda)$
- si $MM'_{2,x,n,\lambda}$ et $MM_{2,x}$ sont égaux, le code d'accès est authentique pour l'option x et les paramètres n et À, et il est mémorisé, ou bien le mot $rand_x$ est mémorisé, associé à l'option x. L'analyse des autres options et paramètres n'est pas poursuivie. Les opérations se terminent avec la mise à jour des états internes et les conclusions suivantes :

    ○ $(ii ; jj ; kk)$ sont mis à jour avec les valeurs $(ii_{new} ; jj_{new} ; kk_{new})$ ;
    ○ la pile de données $\Pi$ est vidée hormis pour l'option A ;
    ○ $tt$ est stocké dans la pile de données $\Pi$ ;
    ○ pour un indice x correspondant à l'option A, $erreur_{codeA}$ est mis à zéro ;
    ○ pour un indice x correspondant à l'option B, $erreur_{codeA}$ et $erreur_{codeB}$ sont mis à zéro ;
    ○ pour un indice x correspondant à l'option C, et si le code d'accès a été fourni via le client d'authentification, $erreur_{codeA}$, $erreur_{codeC}$ et $erreur_{codeB}$ sont mis à zéro.
    ○ si x ne correspond pas à l'option attendue, l'authentification est rejetée et on ne regarde que le dernier test ci-dessous :
    ○ si $\lambda$ est dans $[\sigma+\lambda(\Delta tt_n)-\alpha ; \sigma+\lambda(\Delta tt_n)+\alpha+1]$ ou pour les options B ou C dans $[\gamma_m ; \gamma_M]$, , l'authentification est acceptée et il est inutile d'effectuer les tests ci-dessous ;
    ○ si $\lambda$ est dans $[\sigma+\lambda(\Delta M_n)+\alpha+2 ; \sigma+\lambda(\Delta M_n)+\beta]$ et qu'une correction de $tt_{ref}$ a été effectuée lors de l'une des deux tentatives d'authentification précédentes où le code d'accès a été reconnu authentique, l'authentification est acceptée et il est inutile d'effectuer le test ci-dessous ;
    ○ Si $\lambda$ est dans $[\sigma+\lambda(\Delta tt_n)- \beta ; \sigma+\lambda(\Delta tt_n)-\alpha-1]$, l'authentification est rejetée et $tt_{ref}$ est mis à jour (y compris dans $\Pi$) avec la valeur $tt+(a-p).\delta_2$

- si $MM'_{2,x,n,\lambda}$ et $MM_{2,x}$ ne sont pas égaux, on poursuit les boucles d'algorithme avec les autres valeurs de $\lambda$, n, x. Si aucun cas d'égalité n'est rencontré, le code d'accès n'est pas authentique et l'authentification est rejetée. Les opérations de vérification du code d'accès se terminent avec la mise à jour des états internes de la façon suivante

    ○ pour un indice x correspondant à l'option B uniquement, $(ii ; jj ; kk)$ sont mis à jour avec les valeurs $(ii_{new} ; jj_{new} ; kk_{new})$ ;
    ○ $tt$ est ajouté à la pile de données $\Pi$ ;
    ○ pour un indice x correspondant à l'option A, $erreur_{codeA}$ est incrémenté d'une unité ;
    ○ pour un indice x correspondant à l'option B, $erreur_{codeB}$ est incrémenté d'une unité ;
    ○ pour un indice x correspondant à l'option C, et si le code d'accès a été fourni via le client d'authentification, $erreur_{codeC}$ est incrémenté d'une unité.

Dans le cas où $MM_1$ et $MM_{1,x}$ sont égaux mais que $MM_2$ n'est jamais égal à $MM_{2,x,n,\lambda}$, le code d'accès n'est pas valide, mais il y a un intérêt dans certains cas à mettre à jour les états internes ii, jj et kk.

Dans le cas de l'option A, cela ne présente ni risque, ni intérêt, donc la mise à jour n'a pas lieu.

Dans le cas de l'option B, la mise à jour

- ne présente pas de risque de sécurité sur le protocole d'authentification : un attaquant souhaitant se synchroniser à l'étape d'authentification suivante devra bien fournir un code personnel correct, que la mise à jour ait lieu ou non ;
- ne présente pas de risque de désynchronisation particulier ;
- ne présente pas de risque d'attaque du code personnel par force brute ; ce serait le cas si la mise à jour des états internes conduisait lors de la tentative d'authentification suivante à ce que $MM_1$ et $MM_{1,x}$ ne soient plus égaux (une attaque « par itération multiple » serait en théorie possible), mais $MM_1$ ne dépend ni de ii ni de jj, qui sont les 2 seuls états internes mis à jour pour l'option B ;

- présente l'avantage, l'état jj étant mis à jour en fonction de H(c), qu'un attaquant ayant réussi à s'emparer du moyen d'authentification (voire à en faire un reverse engineering) ne pourra plus réussir d'authentification avec l'option A dès lors qu'il a fait au moins une tentative, nécessairement infructueuse s'il ne connaît pas le code secret du titulaire, avec l'option B.

Dans le cas de l'option C, l'analyse est légèrement différente et conduit à ne pas faire la mise à jour des états internes ii, jj, kk. En effet, après cette mise à jour, en cas d'emploi des options A ou B par un attaquant, $MM_1$ et $MM_{1,x}$ ne sont plus égaux (puisque $MM_1$ est fonction de k), ce qui permet en théorie une attaque en force brute « par itération multiple » sur le code secret personnel non détectable par l'entité d'authentification.

Un code d'accès est utilisable par un attaquant qui en aurait eu connaissance si les 3 conditions suivantes sont réunies :

- Le titulaire ne l'a pas utilisé avant,
- L'attaquant s'en sert avant le délai de péremption du code d'accès, ou lors des moments de validité après chaque pseudo-période qui peut être choisie arbitrairement grande comme on l'a vu précédemment,
- Le titulaire n'a pas saisi entre-temps un code d'accès pour une option réalisant la mise à jour de davantage d'états internes que n'en met à jour l'option du code d'accès saisi par l'attaquant.

Hormis les cas de vol du moyen d'authentification, cela nécessite que l'attaquant écoute le canal d'authentification et fasse une attaque parvenant à l'entité d'authentification avant la tentative du titulaire. Si la tentative du titulaire n'est pas bloquée ou mal aiguillée, l'attaque ne peut se faire qu'en prenant de vitesse la tentative du titulaire : dans le cadre d'une implémentation, l'entité d'authentification doit donc savoir détecter et rejeter des requêtes d'authentification quasiment simultanées pour un même titulaire et avec un même code d'accès.

Ainsi, le système et le protocole décrits précédemment répondent effectivement au problème technique qui leur était assigné en ce qu'ils permettent :

- une utilisation pour le titulaire masquant totalement la complexité sous-jacente, notamment celle de maintien de la synchronisation des états internes et celle de rafraîchissement de ces mêmes états internes ;
- une authentification forte n'utilisant, ni un dispositif physique de protection des données secrètes du moyen d'authentification (tel qu'une carte à puce), ni un moyen technique de transmission d'informations de l'entité d'authentification au moyen d'authentification, ni une horloge fiable pendant la durée d'utilisation du moyen d'authentification.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles.

Dans une première variante, le système comporte une option B' similaire dans son fonctionnement à l'option B. En cas de désynchronisation de k, on ne peut pas demander à l'utilisateur d'utiliser l'option C car elle n'est pas faite pour cela et on ne peut pas non plus le faire de façon « masquée » puisqu'il faut pouvoir distinguer les options du côté de l'entité d'authentification. L'option B' est alors implémentée par le moyen et l'entité d'authentification comme une option similaire à C en particulier pour les mises à jour de variables mais utilisée comme une option B, c'est-à-dire avec saisie d'un code secret par le titulaire, mais sans le client d'authentification. En cas d'échec de l'authentification avec l'option B, si le moyen d'authentification en obtient l'information, l'usage de l'option B' est forcée. L'option B' est également forcée pour garantir un rythme de rafraîchissement minimal de l'état interne k. Par ailleurs, l'entité d'authentification contrôle que l'usage de l'option B' est justifié.

Dans une deuxième variante, les fonctions $G_x$ utilisées pour le calcul du mot $M_2$ sont en outre fonction des états internes non mis à jour. Plus précisément,

- Gb est fonction de j (en plus de $i_{new}$, $j_{new}$ et $k_{new}$)
- $G_{b'}$ est fonction de k (en plus de $i_{new}$, $j_{new}$ et $k_{new}$)
- $G_c$ est fonction de j et de k (en plus de $i_{new}$, $j_{new}$ et $k_{new}$)

Le but de cette variante est que le code secret personnel d'un utilisateur ne puisse pas faire l'objet d'une attaque en force brute, même en cas de « reverse engineering » du moyen d'authentification par l'attaquant. Supposons en effet que ce reverse engineering ait eu lieu, l'attaquant connaît donc notamment $K_1$, SN, et (i, j, k) à un moment donné. Si l'attaquant parvient par la suite à s'emparer d'un code d'accès valide calculé par le titulaire avec l'option C, il peut en théorie facilement réaliser une attaque par force brute du code secret personnel du titulaire, puisque le code d'accès recueilli ne dépend que de $K_1$ et SN (obtenus par reverse engineering), $rand_c$ (contenu dans le code d'accès), $\rho(\Delta t)$ (sur lequel il peut faire des hypothèses) et H(c). L'attaque consiste à essayer de reproduire la valeur du code d'accès en faisant varier c et $\rho(\Delta t)$, sans transmission à l'entité d'authentification - ni donc de contrôle possible par celle-ci.

Si en revanche le code d'accès est - quelque soit l'option employée - fonction d'un ou plusieurs états internes non transmis dans le code d'accès et ne dépendant pas uniquement des valeurs constantes accessibles par reverse engineering, l'attaquant devra de plus les prendre en compte dans son attaque en force brute. Dans une implémentation réelle, le produit du nombre de valeurs possibles de deux états internes par le nombre de codes secrets personnels possibles est beaucoup plus grand (typiquement 2^50 fois plus grand !) que le nombre de codes d'accès (hors éventuellement le mot $rand_x$) possibles, ce qui revient à dire que l'attaque en force brute fournira de nombreux résultats (valeurs des états internes et valeurs plausibles de $\rho(\Delta t)$) pour toutes les valeurs possibles de code secret personnel, rendant ainsi sa vraie valeur indiscernable par l'attaquant. Cela est également vrai si l'attaquant fait l'hypothèse que le code d'accès qu'il a recueilli a été généré juste après l'opération de reverse engineering, c'est-à-dire fait une attaque en faisant varier les mots $rand_x$ (plus petits que les états internes inconnus) ; dans des implémentations typiques de cette variante, au bout de 2 à 3 étapes de génération de code d'accès après le reverse engineering, le code secret personnel devient indiscernable, une attaque par force brute produisant de nombreux résultats pour chaque valeur possible du code secret personnel. Si les fonctions $F_x$ utilisées sont « suffisamment injectives », il est même assez probable que dès la première étape, l'attaque par force brute produise trop de résultats (typiquement 5) pour être directement utilisable par l'attaquant. La seule possibilité d'attaque par force brute restante consiste donc à ce que l'attaquant intercepte le premier code d'accès calculé par le titulaire après le reverse engineering ou, de façon équivalente, à ce qu'il intercepte tous les codes d'accès (les mots $rand_x$) générés entre le reverse engineering et l'attaque par force brute, chacune de ces situations étant possible techniquement mais peu réaliste.

Dans une variante de cette deuxième variante, les états internes non mis à jour (i, j, k) sont remplacés dans le calcul de Gx par un état interne h. L'objectif de cette variante est d'être moins sensible aux cas de désynchronisation pouvant en pratique se présenter dans la deuxième variante, tout en apportant le même avantage en termes de sécurité que celui motivant la deuxième variante. Pour cela, la mise à jour de h à l'étape n se fait grâce à une fonction à sens unique F de la façon suivante :

$h_{new}$= F(h ; $rand_{n-n1}$) où $rand_{n-n1}$ est la clé aléatoire générée à l'étape $n-n_1$, où $n_1$ est un entier strictement positif. Cette mise à jour est de plus conditionnée au fait que le moyen d'authentification n'ait pas d'indication directe ou indirecte de la non transmission du code d'accès généré à l'étape $n-n_1$. Dans le cas contraire, $h_{new}$ = h, l'état interne n'est pas mis à jour.

De son côté, le serveur doit stocker les valeurs de clés secrètes pendant $n_1$ étapes et essayer quelle valeur de $h_{new}$ parmi les au plus $n_1^2$ valeurs possibles permet d'expliquer le code transmis. Une telle variante augmente donc le nombre de codes valides dans un contexte donné, et l'implémentation doit analyser si la longueur des codes est suffisantes pour garantir le niveau de sécurité attendu. Un autre avantage de cette variante concerne le non-rejeu des options C ou B' qui, au lieu d'être simplement minimisé en augmentant la période de réutilisation de rand pour ces options, est directement contrôlé, h n'étant - en pratique - pas périodique.

Dans une seconde variante de cette deuxième variante, l'état interne h et l'état interne k n'en sont qu'un, k étant donc mis à jour grâce à la fonction F et non grâce à une fonction $F_x$.

Dans une troisième variante, le moyen d'authentification peut générer soit un code d'accès dédié à un service s et uniquement valide pour l'authentification à celui-ci, soit un code d'accès commun valide pour l'ensemble des services ne requérant pas un code d'accès dédié.

Le nombre entier $m_s$ est défini ou calculé comme :

- la constante e dans le cas où le titulaire a fait le choix par défaut d'un code d'accès commun, cette constante pouvant être omise,
- l'entier $\Phi_s$ dans le cas où le titulaire a fait le choix d'un code d'accès dédié au service s.

Dans cette variante, l'algorithme de vérification de l'entité d'authentification comporte une boucle intermédiaire supplémentaire entre la boucle des options et la boucle des intervalles de temps basée sur les valeurs possibles de $m_s$ où s est l'indice désignant un service utilisant le système d'authentification, en commençant par le service dont émane le code d'accès en cours d'analyse, c'est-à-dire e, ..., $\Phi_s$,....

Ainsi le nombre de calculs peut augmenter jusqu'à $(2\alpha+1)*S$ calculs supplémentaires en cas d'erreur sur le choix du service pour lequel un code d'accès dédié doit être fourni, S étant le nombre de tels services déclarés dans le compte du titulaire.

Si, après avoir vérifié que $M'_{1,x}$ et $M'_{2,x}$ sont valides, s ne correspond pas au service dont émane le code d'accès, l'authentification est rejetée, mais l'entité d'authentification met à jour ses états internes comme si l'authentification était correcte, de façon à rester synchronisée avec le moyen d'authentification. Cela est notamment possible si l'entier $m_s$ est utilisé par les fonctions $G_x$ mais pas par les fonctions $F_x$.

Dans une quatrième variante, pour un service dédié, l'entité d'authentification lui fournit un code temporaire, propre au service et au moyen d'authentification du titulaire, que le titulaire peut comparer à celui s'affichant sur son moyen d'authentification avant de fournir un code d'accès.

L'entité d'authentification calcule $\Delta tt$ comme $tt - tt_{ref}$ où $tt$ désigne la valeur mesurée par l'horloge interne de l'entité d'authentification et $tt_{ref}$ la valeur stockée le plus récemment dans la pile de données $\Pi$.

Le code d'authentification mutuelle fourni au titulaire pour le service s est calculé comme $D(jj ; kk ; K_1 ; SN ; m_s ; \mu(\Delta tt))$.

Le moyen d'authentification peut alors afficher un code devant reproduire de façon exacte celui qui est fourni par le service s requérant l'authentification, notamment lorsque s requiert un code d'accès dédié, et ce afin que le titulaire du moyen d'authentification obtienne la certitude qu'il s'authentifie sur s et non sur un service cherchant à imiter s.

Pour cela, on calcule, de façon parallèle au calcul de l'entité d'authentification, $\Delta t$ comme $t - t_{ref}$ où $t$ désigne la valeur mesurée par l'horloge interne du moyen d'authentification et le code d'authentification mutuelle affiché par le moyen d'authentification pour le service s comme $D(j ; k ; K1 ; SN() ; m_s ; \mu(\Delta t))$.

D est une fonction à sens unique.

$\mu$ est une fonction de codage de $\Delta t$ définie ainsi : $\mu(\Delta t)$ est l'unique nombre de la forme $q.n\delta_M+\delta'$ dans l'intervalle $[\Delta t ; \Delta t+n\delta_M[$, où

- $q$ est un nombre entier positif ou nul ;
- $n$ est un nombre positif ou nul choisi à la conception du système ;
- $\delta_M = Q_{val}+P_{val}, \delta_m = Q_{min}+P_{min}, \delta_Q = Q_{val}-Q_{min} , \delta_P = P_{val}-P_{min}$;
- $0 \leq \delta' < \eta\delta_M$ est choisi arbitrairement à la conception du système ;
- $Q_{min}$ est le délai minimal accepté entre l'instant de calcul du code d'authentification mutuelle par l'entité d'authentification et l'instant de calcul du code d'authentification mutuelle par le moyen d'authentification. $Q_{min}$ peut éventuellement être négatif si on accepte que le titulaire puisse afficher le code d'authentification mutuelle sur le moyen d'authentification avant de faire la demande du code d'authentification mutuelle auprès du service s. Avant un délai $Q_{min}$, le code d'authentification mutuelle peut ne pas être correct ;
- $Q_{val}$ est le délai maximal accepté entre l'instant de calcul du code d'authentification mutuelle par l'entité d'authentification et l'instant de calcul du code d'authentification mutuelle par le moyen d'authentification. Au-delà d'un délai $Q_{val}$, le code d'authentification mutuelle peut ne pas être correct ;
- $P_{val}$ est le délai minimal de validité d'un code d'accès ;
- $P_{min}$ est le délai minimal mis pour transmettre un code d'accès généré par le moyen d'authentification. $P_{val}$ et $P_{min}$ ont déjà été décrits dans le cadre de la gestion des intervalles de temps.

On a $tt_{ref} - t_{ref} =\varphi+\varphi_0$ et $t-tt = -\varphi+\varphi_t$ où $\varphi_0 \in [P_{min} ; P_{val}]$, $\varphi_t \in [Q_{min} ; Q_{val}]$, et $\varphi$ est le déphasage quelconque, supposé constant, mais pouvant varier sporadiquement, entre les horloges de l'entité d'authentification et du moyen d'authentification. On en déduit que $\Delta t-\Delta tt= \varphi_0+\varphi_t$ donc $\Delta t-\Delta tt \in [\delta_m; \delta_M]$. Pour $\varphi_{0t}= \varphi_0 + \varphi_t$ donné, la probabilité $p(\varphi_{0t})$ que $\mu(\Delta tt)$ et $\mu(\Delta t)$ soient différents est égale à $\varphi_{0t} /\eta\delta_M$. En supposant $\varphi_0$ et $\varphi_t$ équi-répartis sur leur domaine de définition respectif, la probabilité que $\mu(\Delta tt)$ et $\mu(\Delta t)$ soient différents est égale à l'intégrale sur $[P_{min} ; P_{val}] \times [Q_{min} ; Q_{val}]$ de $p(\varphi_{0t})/(\delta_P.\delta_Q)$, c'est-à-dire $(1+\delta_m/\delta_M)/2n$.

Un choix de n élevé améliore la probabilité que le code d'authentification mutuelle soit correct ; il augmente également la période durant laquelle ce code est constant. Ce n'est pas un problème réel car d'une part, il s'agit de quelques minutes pour obtenir des probabilités supérieures à 0,95 que les codes d'authentification mutuelle affiché et fourni soient identiques, d'autre part parce qu'un service cherchant à imiter s ne peut savoir à l'avance que le titulaire va chercher à s'authentifier dans une période donnée de quelques minutes.

L'alternative radicale pour contourner ce résultat probable et non certain consiste à ce que le code d'authentification mutuelle ait, comme le code d'accès, une partie aléatoire (« challenge »), et qu'il soit saisi par le titulaire sur le moyen d'authentification, qui l'accepte ou non. Le procédé est sûr, mais il est beaucoup plus complexe pour le titulaire, nécessitant d'abord une saisie sur le moyen d'authentification, puis sur le service requérant l'authentification, probablement trop complexe pour une application grand public.

Lorsque les codes d'authentification mutuelle fourni par le service s et affiché par le moyen d'authentification sont identiques, le titulaire peut saisir le code d'accès lui permettant de s'identifier auprès du service s. Lorsque ce n'est pas le cas (probabilité inférieure à $(1+\delta_m/\delta_M)/2n$ ou désynchronisation du moyen d'authentification et de l'entité d'authentification), le titulaire a le choix entre

- « rafraîchir » les codes fourni par le service et affiché par le moyen d'authentification. De nouveaux codes sont calculés et fourni/affiché avec d'une part une « phase » $\delta'$ inversée, d'autre part, comme temps de référence pour le calcul de $\Delta t$ et $\Delta tt$, l'instant de calcul du premier code d'authentification mutuelle car ce temps de référence ne change pas en cas de nouveau rafraîchissement des codes. Cette opération permet de régler le cas d'une désyn-

chronisation de $\Delta$t entre le moyen d'authentification et l'entité d'authentification, ainsi que le cas où $\mu(\Delta tt)$ et $\mu(\Delta t)$ sont différents bien qu'il n'y ait pas de désynchronisation. Dans ce dernier cas, le problème peut subsister avec une probabilité $(1+\delta_m/\delta_M)/2n$ puisque $\Delta$t et $\Delta$tt ont été mis à jour. Une nouvelle opération de rafraîchissement - changeant la phase mais ne changeant plus les temps de référence - résoudra le problème de façon certaine ; cette opération ne résout en revanche pas le cas d'un désynchronisation d'états internes (j, k ou $\delta'$) entre le moyen d'authentification et l'entité d'authentification, le titulaire doit donc s'en remettre à l'option ci-dessous si la différence entre codes d'authentification fourni/affiché persiste lors de rafraîchissements successifs : au-delà du premier rafraîchissement, ces codes alternent entre 2 valeurs

- obtenir un code d'accès factice affiché par le moyen d'authentification, généré avec une option B" similaire à B', ne permettant pas de réussir l'authentification, mais resynchronisant les états internes entre le moyen d'authentification et l'entité d'authentification ($\delta'$ est par exemple resynchronisé avec la parité de rand$_{B"}$, alors que $\Delta$t, j et k sont resynchronisés par l'option B" du protocole d'authentification sous réserve de la saisie correcte du secret personnel du titulaire) et permettant par là même de fournir/afficher des codes d'authentification mutuelle identiques. La prise en compte de B" par l'entité d'authentification est identique en tout point à celle de B' sauf pour la décision d'accepter l'authentification en cas de code authentique.

Dans une cinquième variante, le moyen d'authentification peut afficher un code fonction

- d'un argument saisi par le titulaire ;
- des états internes i, j, k ;
- de SN() ;
- du secret K1, voire de H(c) s'il est de nouveau saisi par le titulaire.

Ce code peut posséder différentes fonctions et formats d'affichage, le format d'affichage pouvant lui-même être choisi parmi plusieurs formats prédéfinis grâce une information contenue dans l'argument saisi par l'utilisateur, ou obtenue à partir de calculs sur celui-ci.

Par exemple, après une authentification réussie auprès d'un service, le service peut, pour protéger une opération particulièrement sensible contre une attaque « Man In The Middle » potentiellement déjà réussie mais indétectable, fournir au titulaire une adresse IP qui aura été préalablement codée et changée de format grâce à un masque. Ce masque est fourni par l'entité d'authentification et est une fonction à sens unique des états internes et secrets propres au titulaire et à son moyen d'authentification. Le moyen d'authentification affiche alors « en clair » au titulaire l'adresse IP qu'il doit saisir dans son navigateur afin de poursuivre l'opération, une nouvelle authentification pouvant être requise par le service, puisqu'il s'agit a priori d'une nouvelle session. Le moyen d'authentification possède, sans qu'il soit nécessaire de lui transmettre d'information qui serait susceptible d'être interceptée par l'attaquant, tous les éléments lui permettant de calculer le masque ou son inverse, et donc de l'appliquer sur l'argument saisi afin de retrouver l'information originelle. Alternativement, si l'attaque « Man in The Middle » est plus générale et touche les routeurs d'un fournisseur d'accès et pas uniquement un « cache DNS » utilisé par le titulaire, le code multifonction affiché par le moyen d'authentification peut être utilisé pour mettre en oeuvre une session cryptée entre le navigateur web du titulaire et le site du fournisseur de service.

Dans une sixième variante, le secret $K_3$ (ou le couple $pK_3/sK_3$) stocké dans le client d'authentification est crypté grâce à une clé connue de l'entité d'authentification, mise à jour à chaque authentification réussie du client d'authentification, et fournie au client d'authentification si et seulement si le code d'accès (en général, généré avec l'option C) transmis est correct.

Il est à noter que l'implémentation présentée repose sur un canal de transmission transparent pour le code d'accès : une donnée en entrée est fournie au destinataire dans son état initial, quelque soit les transformations qu'elle ait pu subir lors de son transport. L'homme du métier sait, sans difficulté, adapter cette implémentation à un canal semi-transparent tel que l'utilisation du mode d'authentification http-digest du protocole http.

Dans les revendications, le mot « comprenant » n'exclut pas d'autres éléments et l'article indéfini « un/une » n'exclut pas une pluralité.

## Revendications

1. Système d'authentification d'un utilisateur possédant un moyen d'authentification (3) auprès d'une entité d'authentification (1), ledit moyen d'authentification comportant des moyens de stockage (11) d'au moins une variable d'état et un générateur (2) d'un code d'accès à usage unique actionnable à la demande de l'utilisateur, ledit code d'accès comportant au moins une partie non-prévisible et étant transmis à l'entité d'authentification pour validation, cette validation authentifiant l'utilisateur auprès de l'entité d'authentification, **caractérisé**

• **en ce que** ladite variable d'état est mise à jour de façon aléatoire par et à l'initiative dudit moyen d'authentification, systématiquement et préalablement à chaque génération d'un nouveau code d'accès,
• que ledit générateur est adapté pour calculer ledit code d'accès en utilisant ladite au moins une variable d'état une fois celle-ci mise à jour,
• et que ladite entité d'authentification est adaptée pour modifier la valeur d'au moins une variable d'état interne lors de la validation au moins partielle dudit code d'accès en utilisant pour cela des informations connues préalablement de ladite entité d'authentification ainsi que la partie non-prévisible véhiculée par le code d'accès transmis.

2. Système selon la revendication 1, **caractérisé en ce que** le moyen d'authentification comporte au moins trois variables d'état et l'entité d'authentification comporte un même nombre de variables d'état internes en correspondance une à une avec les variables d'état du moyen d'authentification, et ledit système comporte un premier, un deuxième et un troisième niveaux d'authentification, chaque niveau d'authentification utilisant un procédé distinct de mise à jour d'au moins une des au moins trois variables d'état, les trois procédés étant communs au moyen d'authentification et à l'entité d'authentification.

3. Système selon la revendication 2, **caractérisé en ce que** :

• dans le premier niveau d'authentification, une des au moins trois variables d'état dite première variable d'état est mise à jour par une première fonction ($F_{1,1}$) à sens unique ayant comme paramètres d'entrée les autres variables d'état, au moins une clé secrète propre au moyen d'authentification et une clé aléatoire générée par le moyen d'authentification préalablement à chaque génération de code d'accès ;
• dans le deuxième niveau d'authentification, la première variable d'état et une deuxième variable d'état parmi les au moins trois variables d'état sont mises à jour respectivement par des premières fonctions ($F_{2,1}$, $F_{2,2}$) à sens unique ayant comme paramètres d'entrée les autres variables d'état, la au moins une clé secrète propre au moyen d'authentification, la clé aléatoire, et côté moyen d'authentification une information saisie par l'utilisateur avant chaque génération de code d'accès selon ce deuxième niveau, et côté entité d'authentification une clé secrète propre à l'utilisateur;
• dans le troisième niveau d'authentification, les au moins trois variables d'état sont mises à jour respectivement par des premières fonctions ($F_{3,1}$, $F_{3,2}$, $F_{3,3}$) à sens unique ayant comme paramètres d'entrée la au moins une clé secrète propre au moyen d'authentification, la clé aléatoire, et côté moyen d'authentification une information saisie par l'utilisateur avant chaque génération de code d'accès selon ce troisième niveau, et côté entité d'authentification la clé secrète propre à l'utilisateur.

4. Système selon la revendication 3, **caractérisé en ce que** dans le premier niveau d'authentification, la clé aléatoire générée par le moyen d'authentification ne peut pas reprendre une même valeur tant que le deuxième ou le troisième niveau n'ont pas été mis en oeuvre par le moyen d'authentification, et que, dans le deuxième niveau, ladite clé aléatoire ne peut pas reprendre la même valeur tant que le troisième niveau n'a pas été mis en oeuvre par le moyen d'authentification.

5. Système selon la revendication 4, **caractérisé en ce que** le moyen d'authentification choisit le niveau d'authentification devant être mis en oeuvre selon un ensemble de règles parmi lesquelles figure au moins une règle indiquant que si le moyen d'authentification dispose d'informations directes tels qu'un choix explicite de l'utilisateur, ou indirectes telles que l'usage répété de façon suffisamment rapprochée du moyen d'authentification par l'utilisateur, signifiant de façon au moins probable que le code d'accès généré précédemment n'a pas été reconnu valide par l'entité d'authentification, alors un niveau d'authentification strictement supérieur à celui par ailleurs requis doit être mis en oeuvre, si ce niveau requis n'est pas déjà le troisième.

6. Système selon l'une quelconque des revendications 3 à 5, **caractérisé en ce que** le générateur comporte pour chaque niveau d'authentification des moyens de génération d'un premier nombre ($MM_{2,x}$) à partir d'une deuxième fonction ($G_x$) à sens unique dont les paramètres d'entrée comportent la au moins une variable d'état mise à jour.

7. Système selon la revendication 6, **caractérisé en ce que** le générateur comporte, pour chaque niveau d'authentification :

• une troisième fonction ($E_x$) à sens unique pour générer un second nombre ($MM_{1,x}$) et comportant comme paramètres d'entrée au moins :

• le secret du moyen d'authentification ;

• le nombre aléatoire,

• une fonction possédant une fonction inverse adaptée pour combiner le premier et le second nombre générés par les deuxièmes et troisièmes fonctions ($G_x$, $E_x$) et la clé aléatoire générée par le moyen d'authentification, le nombre combiné représentant le code d'accès et la fonction inverse étant adaptée pour permettre à l'entité d'authentification d'obtenir le premier nombre, le second nombre et la clé aléatoire à partir du code d'accès.

8. Système selon la revendication 7, **caractérisé en ce que** l'entité d'authentification est adaptée pour vérifier la validité du second nombre ($MM_{1,x}$) et la validité du premier nombre ($MM_{2,x}$) de façon distincte.

9. Système selon la revendication 8, **caractérisé en ce que**, lors de la vérification de validité, l'entité d'authentification met à jour des états internes.

10. Système selon la revendication 2, **caractérisé en ce que** le moyen d'authentification et l'entité d'authentification possèdent chacun au moins une variable d'état en correspondance l'une de l'autre différente de la première et de la seconde variable d'état, et cette variable d'état est mise à jour grâce à une fonction à sens unique en fonction de la valeur actuelle de cette variable d'état et de la clé aléatoire générée par le moyen d'authentification lors d'une étape précédente de génération de code d'accès par ledit générateur.

11. Système selon la revendication 7, **caractérisé en ce que** le moyen d'authentification et l'entité d'authentification comportent chacun une horloge, et les moyens de génération du premier nombre ($MM_{2,x}$) sont adaptés pour utiliser une fonction de l'intervalle entre la valeur actuelle d'un temps de référence connue du moyen d'authentification et le temps courant de l'horloge du moyen d'authentification et l'entité d'authentification est adaptée pour ne valider un code d'accès que si elle l'a reçu dans une plage de temps déterminé par rapport aux valeurs actuelles d'un ou plusieurs temps de référence connues de l'entité d'authentification et pour mettre à jour sa propre mesure dudit ou desdits temps de référence dès lors que le second nombre ($MM_{1,x}$) est valide.

12. Système selon l'une quelconque des revendications précédentes, **caractérisé en ce que** ledit système permettant l'authentification de l'utilisateur à une pluralité de services, un code d'accès est généré par le moyen d'authentification en utilisant un code spécifique à un service donné de telle sorte que sa validation par l'entité d'authentification ne donne accès qu'audit service.

13. Système selon la revendication 12, **caractérisé en ce que** le moyen d'authentification est adapté pour calculer un premier code d'accès en utilisant au moins un code spécifique au service, au moyen d'authentification et un intervalle de temps et l'entité d'authentification est adaptée pour calculer un second code d'accès spécifique au service, au moyen d'authentification et le transmettre à l'utilisateur pour que celui-ci puisse le comparer au premier code d'accès et identifier de façon sûre ainsi le service, lesdits premier et second code d'accès n'étant identiques que si le calcul du premier code d'accès par le moyen d'authentification est réalisé dans une plage de temps déterminée par rapport au temps de calcul du second code secret par l'entité d'authentification et que les codes spécifiques au service, au moyen d'authentification utilisés sont les mêmes.

14. Système selon la revendication 3, **caractérisé en ce qu'**il comporte en outre un client d'authentification (5), ledit client d'authentification comportant un secret et étant adapté pour générer un second code d'accès à partir du code d'accès généré par le moyen d'authentification, ledit second code d'accès étant adapté pour authentifier l'utilisateur auprès de l'entité d'authentification.

**Patentansprüche**

1. System zur Authentifizierung eines Benutzers, der ein Authentifizierungsmittel (3) besitzt, bei einer Authentifizierungsentität (1), wobei das Authentifizierungsmittel Mittel (11) zum Speichern mindestens einer Zustandsvariablen und einen Generator (2) eines Zugangscodes mit einmaliger Nutzung, der auf Anfrage des Benutzers betätigbar ist, umfasst, wobei der Zugangscode mindestens einen nicht vorhersehbaren Teil umfasst und zu der Authentifizierungsentität zur Bestätigung übertragen wird, wobei diese Bestätigung den Benutzer bei der Authentifizierungsentität authentifiziert, **dadurch gekennzeichnet,**

- **dass** die Zustandsvariable zufällig durch und auf Initiative des Authentifizierungsmittels systematisch und vor jedem Erzeugen eines neuen Zugangscodes aktualisiert wird,

- **dass** der Generator angepasst ist, um den Zugangscode unter Verwenden der mindestens einen Zustandsvariablen, sobald sie aktualisiert ist, zu berechnen,

- und **dass** die Authentifizierungsentität angepasst ist, um den Wert mindestens einer internen Zustandsvariablen bei der mindestens teilweisen Bestätigung des Zugangscodes unter Verwenden der zuvor bei der Authentifizierungsentität bekannten Informationen sowie des nicht vorhersehbaren Teils, der von dem übertragenen Zugangscode vermittelt wird, zu ändern.

2. System nach Anspruch 1, **dadurch gekennzeichnet, dass** das Authentifizierungsmittel mindestens drei Zustandsvariablen umfasst, und dass die Authentifizierungsentität eine gleiche Anzahl interner Zustandsvariablen in jeweiliger Übereinstimmung mit den Zustandsvariablen des Authentifizierungsmittels umfasst, und wobei das System ein erstes, ein zweites und ein drittes Authentifizierungsniveau umfasst, wobei jedes Authentifizierungsniveau ein getrenntes Verfahren zum Aktualisieren mindestens einer der mindestens drei Zustandsvariablen verwendet, wobei die drei Verfahren für das Authentifizierungsmittel und die Authentifizierungsentität gemeinsam sind.

3. System nach Anspruch 2, **dadurch gekennzeichnet, dass**:

- in dem ersten Authentifizierungsniveau eine der mindestens drei Zustandsvariablen, erste Zustandsvariable genannt, von einer ersten Einwegfunktion ($F_{1,1}$) aktualisiert wird, die als Eingangsparameter die anderen Zustandsvariablen hat, mindestens einen Geheimcode, der dem Authentifizierungsmittel eigen ist und ein Zufallscode, der von dem Authentifizierungsmittel vor jeder Erzeugung eines Zugangscodes erzeugt wird;

- in dem zweiten Authentifizierungsniveau die erste Zustandsvariable und eine zweite Zustandsvariable der mindestens drei Zustandsvariablen jeweils von ersten Einwegfunktionen ($F_{2,1}$, $F_{2,2}$) aktualisiert werden, die als Eingangsparameter die anderen Zustandsvariablen, den mindestens einen Geheimcode, der dem Authentifizierungsmittel eigen ist, den Zufallscode haben, und auf der Seite des Authentifizierungsmittels ist eine Information, die von dem Benutzer vor jedem Erzeugen eines Zugangscodes gemäß diesem zweiten Niveau eingegeben wird, und auf der Seite der Authentifizierungsentität einen Geheimcode, der dem Benutzer eigen ist, hat;

- in dem dritten Authentifizierungsniveau die mindestens drei Zustandsvariablen jeweils von ersten Einwegfunktionen ($F_{3,1}$, $F_{3,2}$, $F_{3,3}$) aktualisiert werden, die als Eingangsparameter den mindestens einen Geheimcode, der dem Authentifizierungsmittel eigen ist, den Zufallscode, und auf der Seite des Authentifizierungsmittels eine Information, die von dem Benutzer vor jedem Erzeugen eines Geheimcodes gemäß diesem dritten Niveau eingegeben wird, und auf der Seite der Authentifizierungseinheit den Geheimcode, der dem Benutzer eigen ist, haben.

4. System nach Anspruch 3, **dadurch gekennzeichnet, dass** in dem ersten Authentifizierungsniveau der Zufallscode, der von dem Authentifizierungsmittel erzeugt wird, einen gleichen Wert nicht annehmen kann, solange das zweite oder das dritte Niveau nicht von dem Authentifizierungsmittel umgesetzt wurden, und dass in dem zweiten Niveau der Zufallscode denselben Wert nicht annehmen kann, solange das dritte Niveau von dem Authentifizierungsmittel nicht umgesetzt wurde.

5. System nach Anspruch 4, **dadurch gekennzeichnet, dass** das Authentifizierungsmittel das Authentifizierungsniveau, das umzusetzen ist, gemäß einer Einheit von Regeln auswählt, unter welchen sich mindestens eine Regel befindet, die angibt, ob das Authentifizierungsmittel über direkte Informationen, wie eine explizite Auswahl des Benutzers, verfügt, oder über indirekte Informationen, wie die wiederholte ausreichend aneinander liegende Nutzung des Authentifizierungsmittels ist durch den Benutzer, die auf mindestens wahrscheinliche Art angibt, dass der zuvor erzeugte Zugangscode von der Authentifizierungsentität als ungültig anerkannt wurde, während ein strikt höheres Authentifizierungsniveau als das, das ansonsten erforderlich ist, umgesetzt werden muss, falls dieses erforderliche Niveau nicht bereits das dritte Niveau ist.

6. System nach einem der Ansprüche 3 bis 5, **dadurch gekennzeichnet, dass** der Generator für jedes Authentifizierungsniveau Mittel zum Erzeugen einer ersten Zahl ($MM_{2,x}$) ausgehend von einer zweiten Einwegfunktion ($G_x$), deren Eingangsparameter die mindestens eine aktualisierte Zustandsvariable umfassen, umfasst.

7. System nach Anspruch 6, **dadurch gekennzeichnet, dass** der Generator für jedes Authentifizierungsniveau Folgendes umfasst:

- eine dritte Einwegfunktion ($E_x$) zum Erzeugen einer zweiten Zahl ($MM_{1,x}$) und als Eingangsparameter mindestens umfassend:

-- den Geheimcode des Authentifizierungsmittels;

-- die Zufallszahl,

- eine Funktion, die eine Umkehrfunktion besitzt, die angepasst ist, um die erste und die zweite Zahl, die von den zweiten und dritten Funktionen ($G_x$, $E_x$) erzeugt werden, und den Zufallscode, der von dem Authentifizierungsmittel erzeugt wird, zu kombinieren, wobei die kombinierte Zahl den Zugangscode darstellt, und die umgekehrte Funktion angepasst ist, um es der Authentifizierungsentität zu erlauben, die erste Zahl, die zweite Zahl und die Zufallszahl ausgehend von dem Zugangscode zu erhalten.

8. System nach Anspruch 7, **dadurch gekennzeichnet, dass** die Authentifizierungsentität angepasst ist, um die Gültigkeit der zweiten Zahl ($MM_{1,x}$) und die Gültigkeit der ersten Zahl ($MM_{2,x}$) getrennt zu prüfen.

9. System nach Anspruch 8, **dadurch gekennzeichnet, dass** bei der Gültigkeitsprüfung die Authentifizierungsentität die inneren Zustände aktualisiert.

10. System nach Anspruch 2, **dadurch gekennzeichnet, dass** das Authentifizierungsmittel und die Authentifizierungsentität jeweils mindestens eine Zustandsvariable besitzen, die einer der anderen unterschiedlichen der ersten und zweiten Zustandsvariablen entspricht, und dass diese Zustandsvariable dank einer Einwegfunktion in Abhängigkeit von dem aktuellen Wert dieser Zustandsvariablen und dem Zufallscode, der von dem Authentifizierungsmittel bei einem vorhergehenden Erzeugungsschritt eines Zufallscodes durch den Generator aktualisiert wird.

11. System nach Anspruch 7, **dadurch gekennzeichnet, dass** das Authentifizierungsmittel und die Authentifizierungsentität jeweils einen Taktgeber umfassen, und dass die Mittel zum Erzeugen der ersten Zahl ($MM_{2,x}$) angepasst sind, um eine Intervallfunktion zwischen dem aktuellen Wert einer dem Authentifizierungsmittel bekannten Referenzzeit und der aktuellen Zeit des Taktgebers des Authentifizierungsmittels zu verwenden, und die Authentifizierungsentität angepasst ist, um den Zugangscode nur zu bestätigen, falls sie ihn in einem bestimmten Zeitbereich in Bezug auf die aktuellen Werte einer oder mehrerer Referenzzeiten, die der Authentifizierungsentität bekannt sind, empfangen hat, und um ihre eigene Messung der Referenzzeit oder Referenzzeiten zu aktualisieren, sobald die zweite Zahl ($MM_{1,x}$) gültig ist.

12. System nach einem der vorhergehenden Ansprüche, **dadurch gekennzeichnet, dass** das System die Authentifizierung des Benutzers bei einer Vielzahl von Diensten erlaubt, ein Zugangscode von dem Authentifizierungsmittel unter Verwenden eines spezifischen Codes eines Dienstes derart erzeugt wird, dass seine Bestätigung durch die Authentifizierungsentität Zugang nur zu dem Dienst gibt.

13. System nach Anspruch 12, **dadurch gekennzeichnet, dass** das Authentifizierungsmittel angepasst ist, um einen ersten Zugangscode unter Verwenden mindestens eines für den Dienst, das Authentifizierungsmittel spezifischen Code zu berechnen, und die Authentifizierungsentität angepasst ist, um einen zweiten dem Dienst, dem Authentifizierungsmittel spezifischen Code zu berechnen und zu dem Benutzer zu übertragen, damit dieser den ersten Zugangscode vergleichen und daher auf sichere Art den Dienst identifizieren kann, wobei der erste und zweite Zugangscode nur identisch sind, falls die Berechnung des ersten Zugangscode durch das Authentifizierungsmittel in einem bestimmten Zeitbereich in Bezug auf die Zeit zum Berechnen des zweiten Geheimcodes durch die Authentifizierungsentität ausgeführt wird, und dass die für den Dienst, das Authentifizierungsmittel spezifischen verwendeten Codes die gleichen sind.

14. System nach Anspruch 3, **dadurch gekennzeichnet, dass** es außerdem einen Authentifizierungsclient (5) umfasst, wobei der Authentifizierungsclient einen Geheimcode umfasst und angepasst ist, um einen zweiten Zugangscode ausgehend von dem von dem Authentifizierungsmittel erzeugten Zugangscode zu erzeugen, wobei der zweite Zugangscode angepasst ist, um den Benutzer bei der Authentifizierungsentität zu authentifizieren.

**Claims**

1. System for authenticating a user having a means (3) for authentication in an authentication unit (1), said authentication means comprising means (11) for storing at least one state variable and a generator (2) of a single-use access code that can be actuated when requested by the user, said access code comprising at least one non-foreseeable portion and being transmitted to the authentication unit for validation, this validation authenticating the user in the authentication unit, **characterised**

- **in that** said state variable is updated randomly by and on the initiative of said authentication means, systematically and before each generation of a new access code,
- **in that** said generator is suitable for calculating said access code by using said at least one state variable once the latter has been updated,
- and **in that** said authentication unit is suitable for modifying the value of at least one internal state variable during the at least partial validation of said access code by using, for this purpose, information previously known by said authentication unit and the non-foreseeable portion conveyed by the transmitted access code.

**2.** System according to claim 1, **characterised in that** the authentication means comprises at least three state variables and the authentication unit comprises the same number of internal state variables matching one to one with the state variables of the authentication means, and said system comprises a first, a second and a third level of authentication, each level of authentication using a distinct method for updating at least one of the at least three state variables, the three methods being common to the authentication means and to the authentication unit.

**3.** System according to claim 2, **characterised in that**:

- in the first level of authentication, one of the at least three state variables called first state variable is updated by a first one-way function ($F_{1,1}$) having, as input parameters, the other state variables, at least one secret key specific to the authentication means and a random key generated by the authentication means before each generation of an access code;
- in the second level of authentication, the first state variable and a second state variable out of the at least three state variables are updated by first one-way functions ($F_{2,1}$, $F_{2,2}$), respectively, having, as input parameters, the other state variables, the at least one secret key specific to the authentication means, the random key, and in the authentication means, a piece of information inputted by the user before each generation of an access code according to this second level, and in the authentication unit, a secret key specific to the user;
- in the third level of authentication, the at least three state variables are updated by first one-way functions ($F_{3,1}$, $F_{3,2}$, $F_{3,3}$), respectively, having, as input parameters, the at least one secret key specific to the authentication means, the random key, and in the authentication means, a piece of information inputted by the user before each generation of an access code according to this third level, and in the authentication unit, the secret key specific to the user.

**4.** System according to claim 3, **characterised in that** in the first level of authentication, the random key generated by the authentication means cannot repeat the same value as long as the second or third level has not been implemented by the authentication means, and **in that** in the second level, said random key cannot repeat the same value as long as the third level has not been implemented by the authentication means.

**5.** System according to claim 4, **characterised in that** the authentication means chooses the level of authentication that must be implemented according to a set of rules among which there is at least one rule indicating that if the authentication means has direct information such as an explicit choice by the user, or indirect information such as the repeated and sufficiently close-together use of the authentication means by the user, which means, at least probably, that the access code previously generated was not recognised as valid by the authentication unit, then a level of authentication strictly higher than that otherwise required must be implemented if this required level is not already the third level.

**6.** System according to any one of claims 3 to 5, **characterised in that** the generator comprises, for each level of authentication, means for generating a first number ($MM_{2,x}$) on the basis of a second one-way function ($G_x$), the input parameters of which comprise the at least one updated state variable.

**7.** System according to claim 6, **characterised in that** the generator comprises, for each level of authentication:

- a third one-way function ($E_x$) for generating a second number ($MM_{1,x}$) and comprising, as input parameters, at least:

  -- the secret of the authentication means;
  -- the random number,

- a function having an inverse function suitable for combining the first and the second number generated by the second and third functions ($G_x$, $E_x$) and the random key generated by the authentication means, the combined number representing the access code and the inverse function being suitable for allowing the authentication unit to obtain the first number, the second number and the random key from the access code.

8. System according to claim 7, **characterised in that** the authentication unit is suitable for verifying the validity of the second number ($MM_{1,x}$) and the validity of the first number ($MM_{2,x}$) in a distinct manner.

9. System according to claim 8, **characterised in that** during the verification of validity, the authentication unit updates internal states.

10. System according to claim 2, **characterised in that** the authentication means and the authentication unit each have at least one state variable corresponding to one another and different than the first and the second state variable, and this state variable is updated via a one-way function according to the current value of this state variable and the random key generated by the authentication means during a previous step of generation of an access code by said generator.

11. System according to claim 7, **characterised in that** the authentication means and the authentication unit each comprise a clock, and the means for generating the first number ($MM_{2,x}$) are suitable for using a function of the interval between the current value of a reference time known to the authentication means and the current time of the clock of the authentication means and the authentication unit is suitable for only validating an access code if said unit received it in a predetermined time interval with respect to the current values of one or more reference times known to the authentication unit and for updating its own measurement of said reference time(s) as soon as the second number ($MM_{1,x}$) is valid.

12. System according to any one of the previous claims, **characterised in that** said system allowing the authentication of the user to a plurality of services, an access code is generated by the authentication means by using a code specific to a given service in such a way that its validation by the authentication unit only gives access to said service.

13. System according to claim 12, **characterised in that** the authentication means is suitable for calculating a first access code by using at least one code specific to the service, to the authentication means and a time interval and the authentication unit is suitable for calculating a second access code specific to the service, to the authentication means and transmitting it to the user in order for the latter to be able to compare it to the first access code and thus securely identify the service, said first and second access code only being identical if the calculation of the first access code by the authentication means is carried out in a predetermined time interval with respect to the time of calculation of the second secret code by the authentication unit and if the codes specific to the service, to the authentication means used are the same.

14. System according to claim 3, **characterised in that** it further comprises an authentication client (5), said authentication client comprising a secret and being suitable for generating a second access code from the access code generated by the authentication means, said second access code being suitable for authenticating the user in the authentication unit.

FIG.1.

FIG.2A.

FIG.2B.

FIG.2C.

$$\text{rand}_x \quad \text{—}\,S30$$

$$M_{1,x} = E_x(k, K_1 \text{ rand}_x, H) \quad \text{—}\,S32$$

$$(i_{new}, j_{new}, k_{new}) = F_x(j, k, K_1, CODE, \text{rand}_x) \quad \text{—}\,S34$$

$$M_{2,x} = G_x(i_{new}, j_{new}, k_{new}, \rho\ (\Delta t)) \quad \text{—}\,S36$$

$$CA = \text{concat}_x(M_{1,x}, M_{2,x}, \text{rand}_x)$$

# FIG.3.

$$M_{1,c}, M_{2,c}, \text{rand}_c = \text{separe}_c(CA_1) \quad \text{—}\,40$$

$$M_1' = E_d(K_3, M_{1,c}) \quad \text{—}\,42$$

$$M_2' = G_d(K_3, M_{2,c}) \quad \text{—}\,44$$

$$CA_2 = \text{concat}_c(M_1', M_2', \text{rand}_c)$$

# FIG.4.

FIG.5.

**EP 2 347 541 B1**

## RÉFÉRENCES CITÉES DANS LA DESCRIPTION

**Documents brevets cités dans la description**

- WO 0217555 A